(19) Europäisches Patentamt
European Patent Office
Office européen des brevets

(11) EP 4 307 662 A1

(12) EUROPEAN PATENT APPLICATION
published in accordance with Art. 153(4) EPC

(43) Date of publication:
17.01.2024 Bulletin 2024/03

(51) International Patent Classification (IPC):
H04N 19/124 (2014.01)

(21) Application number: 21930978.8

(52) Cooperative Patent Classification (CPC):
H04N 19/124

(22) Date of filing: 13.04.2021

(86) International application number:
PCT/CN2021/087043

(87) International publication number:
WO 2022/193390 (22.09.2022 Gazette 2022/38)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 13.03.2021 CN 202110272824

(71) Applicant: GUANGDONG OPPO MOBILE
TELECOMMUNICATIONS
CORP., LTD.
Dongguan, Guangdong 523860 (CN)

(72) Inventors:
• HUANG, Hang
  Dongguan, Guangdong 523860 (CN)
• YUAN, Qichao
  Dongguan, Guangdong 523860 (CN)
• WANG, Fan
  Dongguan, Guangdong 523860 (CN)

(74) Representative: Taor, Simon Edward William
Venner Shipley LLP
200 Aldersgate
London EC1A 4HD (GB)

(54) **VIDEO CODING AND DECODING METHOD AND SYSTEM, AND VIDEO CODER AND VIDEO DECODER**

(57) Provided in the embodiments of the present application are a video coding method and system and a video decoding method and system, and a video coder and a video decoder. The video decoding method comprises: during a video decoding process, decoding a code stream to obtain flag bit information of a block to be decoded; for a coefficient to be decoded in said block, acquiring, from the flag bit information of said block, flag bit information of a previous quantized coefficient which has been subjected to inverse quantization before the coefficient to be decoded; according to the flag bit information of the previous quantized coefficient, determining, from N quantizers in a DQ mode, a target quantizer used to quantize the coefficient to be decoded; and according to the target quantizer, performing inverse quantization on the coefficient to be decoded. In other words, in the present application, a target quantizer can be determined as long as flag bit information of a previous quantized coefficient of a coefficient to be decoded is obtained, without waiting for the completion of decoding of the coefficient to be decoded, thereby reducing the coding and decoding complexity and improving the coding and decoding efficiency.

| An encoding block is acquired | S801 |

| A prediction block of the encoding block is acquired by performing prediction on the encoding block | S802 |

| A residual block of the encoding block is acquired according to the encoding block and the prediction block | S803 |

| A transform block is acquired by transforming the residual block | S804 |

| Flag information of a previous quantization coefficient quantized before a coefficient to be coded in the transform block is acquired | S805 |

| A target quantizer is determined from N quantizers according to the flag information of the previous quantization coefficient, and the coefficient to be coded is quantized using the target quantizer to acquire a current quantization coefficient, the N quantizers being quantizers corresponding to the DQ quantization mode | S806 |

| The current quantization coefficient is encoded to obtain a bitstream | S807 |

**FIG. 8**

**Description**

CROSS-REFERENCE TO RELATED APPLICATION

This application claims priority to Chinese Patent Application No. 202110272824.4 entitled "VIDEO CODING AND DECODING METHOD AND SYSTEM, AND VIDEO CODER AND VIDEO DECODER" filed with SIPO on March 13, 2021, the entire contents of which are hereby incorporated herein by reference in its entirety.

TECHNICAL FIELD

The disclosure relates to the field of video coding and decoding, and particularly to a video coding and decoding method and system, a video encoder, and a video decoder.

BACKGROUND

Digital video technology may be incorporated into multiple video apparatuses such as a digital television set, a smart mobile phone, a computer, an e-reader, or a video player, etc. With development of video technology, video data include an enormous amount of data. To facilitate video data transmission, a video apparatus performs video compression such that video data are transmitted or stored more efficiently.

During video compression, to facilitate coding, a transform coefficient may be quantized, such as through duality quantization. There are two quantizers in duality quantization. The two quantizers have the same quantization step, but match transform coefficients in an interleaved manner. Duality quantization enables a quantizer with a large step to perform finer quantization, reducing a loss between a reconstructed transform coefficient and an original transform coefficient, thereby improving coding efficiency.

However, existing coding modes are complicated and lead to inefficient coding.

SUMMARY

Embodiments of the disclosure provide a video coding and decoding method and system, a video encoder, and a video decoder, capable of lowering coding and decoding complexity, thereby improving coding and decoding efficiency.

In a first aspect, the disclosure provides a method for encoding a video, including the following operations.

An encoding block is acquired. A transform block of the encoding block is acquired by processing the encoding block. Flag information of a previous quantization coefficient quantized before a coefficient to be coded in the transform block is acquired. A target quantizer is determined from N quantizers according to the flag information of the previous quantization coefficient and the coefficient to be coded is quantized using the target quantizer to acquire a current quantization coefficient. The N quantizers are quantizers corresponding to dependent quantization (DQ), and N is a positive integer greater than or equal to 2.

In a second aspect, the embodiments of the disclosure provide a method for decoding a video, including the following operations.

Flag information of a decoding block is acquired by decoding a bitstream. Flag information of a previous quantization coefficient subjected to inverse quantization before a coefficient to be decoded in the decoding block is acquired from the flag information of the decoding block. The coefficient to be decoded is acquired by performing quantization using a quantizer of N quantizers. The N quantizers are quantizers corresponding to DQ, and N is a positive integer greater than or equal to 2. A target quantizer in the N quantizers used to quantize the coefficient to be decoded is determined according to the flag information of the previous quantization coefficient. Inverse quantization is performed on the coefficient to be decoded according to the target quantizer.

In a third aspect, the disclosure provides a video encoder configured to implement the method of the first aspect or an implementation thereof. Specifically, the encoder includes various functional units configured to implement the method of the first aspect or an implementation thereof.

In a fourth aspect, the disclosure provides a video decoder configured to implement the method of the second aspect or an implementation thereof. Specifically, the decoder includes various functional units configured to implement the method of the second aspect or an implementation thereof.

In a fifth aspect, the disclosure provides a video encoder including a memory and a processor. The memory is configured to store a computer program. The processor is configured to call and run the computer program stored in the memory to implement the method of the first aspect or an implementation thereof.

In a sixth aspect, the disclosure provides a video decoder including a memory and a processor. The memory is configured to store a computer program. The processor is configured to call and run the computer program stored in the memory to implement the method of the second aspect or an implementation thereof.

In a seventh aspect, the disclosure provides a video coding and decoding system including a video encoder and a video decoder. The video encoder may be configured to implement the method of the first aspect or an implementation thereof. The video decoder may be configured to implement the method of the second aspect or an implementation thereof.

In an eighth aspect, the disclosure provides a chip configured to implement the method of the first aspect or the second aspect, or of an implementation of the first aspect or the second aspect. Specifically, the chip includes a processor configured to call and run a computer program in a memory to cause a device installed with the chip to implement the method of the first aspect or the second aspect, or of an implementation of the first aspect or the second aspect.

In a ninth aspect, the disclosure provides a computer-readable storage medium configured to store a computer program. The computer program causes a computer to implement the method of the first aspect or the second aspect, or of an implementation of the first aspect or the second aspect.

In a tenth aspect, the disclosure provides a computer program product including computer program instructions. The computer program instructions cause a computer to implement the method of the first aspect or the second aspect, or of an implementation of the first aspect or the second aspect.

In an eleventh aspect, the disclosure provides a computer program. When executed on a computer, the computer program causes a computer to implement the method of the first aspect or the second aspect, or of an implementation of the first aspect or the second aspect.

In a twelfth aspect, the disclosure further provides a bitstream generated according to the method of the first aspect.

Based on the above technical solutions, during video decoding, flag information of a decoding block is acquired by decoding a bitstream. Flag information of a previous quantization coefficient subjected to inverse quantization before a coefficient to be decoded in the decoding block is acquired from the flag information of the decoding block, and the coefficient to be decoded is acquired by performing quantization in DQ mode. A target quantizer used to quantize the coefficient to be decoded is determined from N DQ quantizers according to the flag information of the previous quantization coefficient. Inverse quantization is performed on the coefficient to be decoded according to the target quantizer. That is, in the disclosure, to determine the target quantizer, it is only required to acquire the flag information of the previous quantization coefficient of the coefficient to be decoded, without waiting till decoding of the coefficient to be decoded completes, thus lowering coding and decoding complexity, improving coding and decoding efficiency.

BRIEF DESCRIPTION OF THE DRAWINGS

FIG. 1 is a schematic block diagram of a video coding and decoding system 100 according to an embodiment of the disclosure.

FIG. 2 is a schematic block diagram of a video encoder 200 according to an embodiment of the disclosure.

FIG. 3 is a schematic block diagram of a decoding framework 300 according to an embodiment of the disclosure.

FIG. 4 is a schematic diagram of quantization using two quantizers Q0 and Q1.

FIG. 5 is a schematic diagram of state transition for determining a quantizer used for a transform coefficient.

FIG. 6 is a schematic diagram of a dependency between states and transform coefficient levels represented by a grid structure.

FIG. 7 is a schematic diagram of candidate transform coefficient levels for Q0 and Q1.

FIG. 8 is a schematic flowchart of a method for encoding a video according to an embodiment of the disclosure.

FIG. 9 is a schematic diagram of quantizers Q0 and Q1 in the related DQ technology.

FIG. 10 is a schematic diagram of quantizers Q0 and Q1 according to the disclosure.

FIG. 11 is a schematic flowchart of another method for encoding a video according to an embodiment of the disclosure.

FIG. 12 is a schematic flowchart of a method for decoding a video according to an embodiment of the disclosure.

FIG. 13 is a schematic diagram of coding coefficients in a scan region according to an embodiment of the disclosure.

FIG. 14 is a schematic block diagram of a video encoder according to an embodiment of the disclosure.

FIG. 15 is a schematic block diagram of a video decoder according to an embodiment of the disclosure.

FIG. 16 is a schematic block diagram of an electronic device according to an embodiment of the disclosure.

FIG. 17 is a schematic block diagram of a video coding and decoding system according to an embodiment of the disclosure.

DETAILED DESCRIPTION

Technical solutions in embodiments of the disclosure are described below with reference to the drawings in the embodiments of the disclosure.

The disclosure may apply to a field such as picture coding and decoding, video coding and decoding, hardware video coding and decoding, application specific circuit video coding and decoding, real-time video coding and decoding, etc. For example, a solution of the disclosure may be combined with an audio video coding standard (AVS) such as an H.264/audio video coding (AVC) standard, an H.265/high efficiency video coding (HEVC) standard, an H.266/versatile video coding (VVC) standard, etc. Alternatively, a solution of the disclosure may operate with reference to another proprietary or industry standard, including ITU-TH.261, ISO/IECMPEG-1Visual, ITU-TH.262 or ISO/IECMPEG-2Visual, ITU-TH.263, ISO/IECMPEG-4Visual, ITU-TH.264 (also referred to as ISO/IECMPEG-4AVC), as well as scalable video coding (SVC) and multiview video coding (MVC) extension. Technology of the disclosure is not limited to any specific coding and decoding standard or technology.

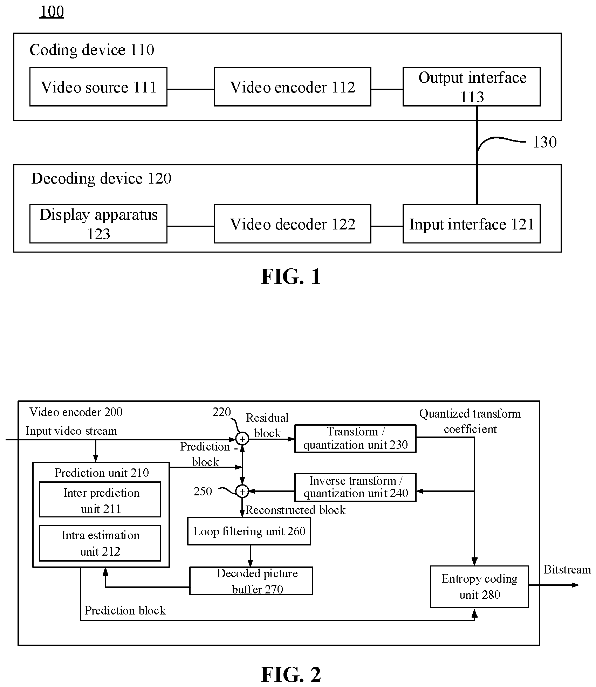

To facilitate understanding, a video coding and decoding system involved in the embodiments of the disclosure is introduced with reference to FIG. 1 firstly.

FIG. 1 is a schematic block diagram of a video coding and decoding system 100 according to an embodiment of the disclosure. It is to be noted that FIG. 1 is just an example. A video coding and decoding system according to embodiments of the disclosure may include, but is not limited to, that shown in FIG. 1. As shown in FIG. 1, the video coding and decoding system 100 may include a coding device 110 and a decoding device 120. The coding device may be configured to code video data (which may be understood as compressing the video data) to generate a bitstream, and transmit the bitstream to the decoding device. The decoding device may be configured to decode/parse the bitstream generated by the coding device, to acquire the decoded video data.

The coding device 110 according to embodiments of the disclosure may be understood as a device having a function of video coding. The decoding device 120 according to embodiments of the disclosure may be understood as a device having a function of video decoding. That is, the coding device 110 as well as the decoding device 120 according to embodiments of the disclosure may include a wider range of apparatuses such as a smart mobile phone, a desktop computer, a mobile computing apparatus, a notebook computer (such as a laptop), a pad, a set-top box, a television set, a camera, a display apparatus, a digital media player, a video game console, an onboard computer, etc.

In some embodiments, the coding device 110 may transmit encoded video data (such as the bitstream) to the decoding device 120 through a channel 130. The channel 130 may include one or more media and/or apparatuses capable of transmitting the encoded video data from the coding device 110 to the decoding device 120.

In an instance, the channel 130 may include one or more communication media enabling the coding device 110 to transmit the encoded video data directly to the decoding device 120 in real time. In the instance, the coding device 110 may modulate the encoded video data according to a communication standard, and transmit the modulated video data to the decoding device 120. A communication medium may include a wireless communication medium such as a radio frequency spectrum. In an example, a communication medium may further include a wired communication medium such as one or more physical transmission lines.

In another instance, the channel 130 may include a storage medium. The storage medium may store the encoded video data by the coding device 110. The storage medium may include multiple local access data storage media, such as a compact disc (CD), a digital video disc (DVD), a flash memory, etc. In the instance, the decoding device 120 may acquire the coded video data from the storage medium.

In another instance, the channel 130 may include a storage server. The storage server may store the encoded video data by the coding device 110. In the instance, the decoding device 120 may download the stored encoded video data from the storage server. In an example, the storage server may store the encoded video data and may transmit the encoded video data to the decoding device 120 such as a web server (such as a web server configured for a website), a file transfer protocol (FTP) server, etc.

In some embodiments, the coding device 110 may include a video encoder 112 and an output interface 113. The output interface 113 may include a modulator/demodulator (modem) and/or a transmitter.

In some embodiments, in addition to the video encoder 112 and the input interface 113, the coding device 110 may further include a video source 111.

The video source 111 may include at least one of a video collecting apparatus (such as a video camera), a video archive, a video input interface, or a computer graphics system. The video input interface may be configured to receive video data from a video content provider. The computer graphics system may be configured to generate video data.

The video encoder 112 may encode video data from the video source 111 to generate a bitstream. The video data may include one or more pictures or one or more sequences of pictures. The bitstream may include coding information on the one or more pictures or sequences of pictures in form of a bitstream. The coding information may include coded picture data and related data. The related data may include a sequence parameter set (SPS), a picture parameter set (PPS), another syntax structure, etc. The SPS may include one or more parameters applying to one or more sequences. The PPS may include one or more parameters applying to one or more pictures. A syntax structure may refer to a set of zero or more syntax elements in the bitstream arranged in a designated order.

The video encoder 112 may transmit the encoded video data directly to the decoding device 120 through the output interface 113. The encoded video data may further be stored on a storage medium or a storage server for subsequent reading by the decoding device 120.

In some embodiments, the decoding device 120 may include an input interface 121 and a video decoder 122.

In some embodiments, in addition to the input interface 121 and the video decoder 122, the decoding device 120 may further include a display apparatus 123.

The input interface 121 may include a receiver and/or a modem. The input interface 121 may receive the encoded video data through the channel 130.

The video decoder 122 may be configured to decode the encoded video data to acquire decoded video data, and transmit the decoded video data to the display apparatus 123.

The display apparatus 123 may display the decoded video data. The display apparatus 123 may be integrated in the decoding device 120, or may be external to the decoding device 120. The display apparatus 123 may include multiple types of display apparatuses, such as a liquid crystal display (LCD), a plasma display, an organic light-emitting diode (OLED) display, or a display apparatus of another type.

In addition, FIG. 1 is merely an instance. A technical solution according to embodiments of the disclosure is not limited to FIG. 1. For example, technology of the disclosure may further apply to just a video coding side or just a video decoding side.

A video coding framework according to embodiments of the disclosure is introduced below.

FIG. 2 is a schematic block diagram of a video encoder 200 according to an embodiment of the disclosure. It is to be noted that the video encoder 200 may be configured to perform lossy compression on a picture, and may also be configured to perform lossless compression on a picture. Lossless compression may be visually lossless compression, or may be mathematically lossless compression.

The video encoder 200 may apply to picture data in luma chroma format (YCbCr, YUV). For example, a YUV ratio may be 4:2:0, 4:2:2, or 4:4:4. Y denotes luma. Cb (U) denotes blue chroma. Cr (V) denotes red chroma. U and V denote chroma for describing color and saturation. For example, in a color format, 4:2:0 represents that each 4 pixels may have 4 luma components and 2 chroma components (YYYYCbCr), 4:2:2 represents that each 4 pixels may have 4 luma components and 4 chroma components (YYYYCbCrCbCr), and 4:4:4 represents full pixel display (YYYYCb-CrCbCrCbCrCbCr).

For example, the video encoder 200 reads video data, and partitions each picture in the video data into a number of coding tree units (CTUs). In some examples, a coding tree block (CTB) may be referred to as a tree block or a largest coding unit (LCU) or a coding tree block (CTB). Each CTU may be related to (associated with) a pixel block with an equal size in the picture. Each pixel may correspond to a luminance/luma sample and two chrominance/chroma samples. Therefore, each CTU may be related to one luma sample block and two chroma sample blocks. For example, the size of a CTU may be 128×128, 64×64, 32×32, etc. A CTU may further be partitioned into a number of coding units (CUs) for coding. A CU may be a rectangular block or a square block. A CU may further be partitioned into a prediction unit (PU) and a transform unit (TU), thus enabling separate coding, prediction, and transform, as well as more flexible processing. In an example, a CTU is partitioned into CUs in a quadtree mode. A CU may be partitioned into TUs and PUs in the quadtree mode.

A video encoder and a video decoder may support various PU sizes. Assuming that a specific CU is of a size 2N×2N, the video encoder and the video decoder may support PUs of a size 2N×2N or N×N for intra prediction, and support symmetrical PUs of a size 2N×2N, 2N×N, N×2N, N×N, or a similar size for inter prediction. The video encoder and the video decoder may further support asymmetrical PUs of a size 2N×nU, 2N×nD, nL×2N, and nR×2N for inter prediction.

In some embodiments, as shown in FIG. 2, the video encoder 200 may include a prediction unit 210, a residual unit 220, a transform/quantization unit 230, an inverse transform/quantization unit 240, a reconstructing unit 250, a loop filtering unit 260, a decoded B pictureuffer 270, and an entropy coding unit 280. It is to be noted that the video encoder 200 may include more functional components, less functional components, or different functional components.

In an example of the disclosure, a decoding block (current block) may be referred to as a current coding unit (CU) or a current PU, etc. A prediction block may also be referred to as a predicted encoding block or a picture predicted block. A reconstructed encoding block may also be referred to as a reconstructed block or a reconstructed picture encoding block.

In some embodiments, the prediction unit 210 may include an inter prediction unit 211 and an intra prediction unit 212. Due to a strong correlation between neighbouring pixels in a picture of a video, in video coding and decoding, space redundancy between neighbouring pixels may be eliminated through intra prediction. Due to high similarity between neighbouring pictures in a video, in video coding and decoding, time redundancy between neighbouring pictures may be eliminated through inter prediction, thereby improving coding efficiency.

The inter prediction unit 211 may be configured for inter prediction. Inter prediction may refer to picture information of distinct pictures. In inter prediction, a reference block is determined from the reference pictures using motion information, and a prediction block may be generated according to the reference block to eliminate time redundancy. A picture used in inter prediction may be a P picture and/or a B picture. The P picture may refer to a forward-predicted picture. The B picture may refer to a bidirectional predicted picture. Motion information may include a list of reference pictures including the reference picture, an index of the reference picture, and a motion vector. The motion vector may be of an integral pixel or of a sub pixel. If a motion vector is of a sub pixel, then a block of the required sub pixel needs to be made in the reference picture by means of interpolation filtering. Herein, the block of the integral pixel or the sub-pixel in the reference picture that is found according to the motion vector is called a reference block. The reference block is directly used as the prediction block in some technologies. In some technologies, reprocessing is performed based on the reference block to generate the prediction block. Performing reprocessing based on the reference block to generate the prediction block may also be understood as that the reference block is used as the prediction block, and then a new prediction block is generated by processing based on the prediction block.

Inter prediction methods most commonly used at present include a geometric partitioning mode (GPM) in VVC video coding and decoding standard and angular weighted prediction (AWP) in AVS3 video coding and decoding standard. The two intra prediction modes have something in common in principle.

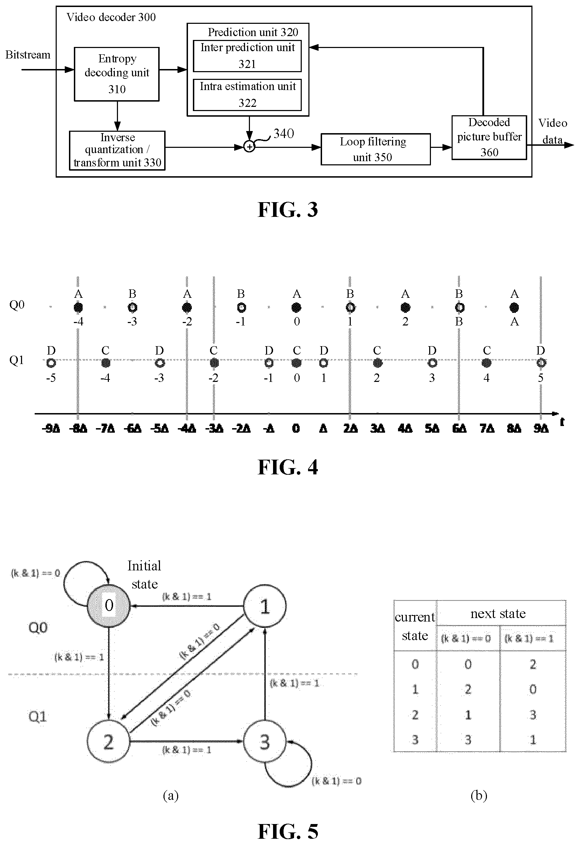

The intra prediction unit 212 may predict information on a pixel in a current encoding block by referring to information of the same picture to eliminate space redundancy. The picture used in intra prediction may be I picture. For example, as shown in FIG. 5, a white $4\times4$ block may be a decoding block. Gray pixels on a left column and an upper row of the decoding block may be reference pixels of the decoding block. Intra prediction may be performed on the decoding block using such reference pixels. All reference pixels may have been available. That is, all reference pixels may have been coded and decoded. Alternatively, some reference pixels may be unavailable. For example, if the decoding block is on the leftmost side of the entire picture, the reference pixels on the left side of the decoding block are not available. Or, when the decoding block is coded and decoded, the bottom-left part of the decoding block has not been coded and decoded yet, and the reference pixels at the bottom-left part are also not available. In case that the reference pixels are not available, the available reference pixels or certain values or certain methods may be used for filling or without filling.

In some embodiments, intra prediction methods may further include multiple reference line (MRL) prediction. With MRL prediction, more reference pixels may be used, thereby improving the coding efficiency.

There are multiple prediction modes for intra prediction. Intra prediction performed on a 4x4 block in H.264 may include 9 modes. In Mode 0, the pixels above the decoding block are copied to the decoding block in a vertical direction as predicted values; in Mode 1, the reference pixels on the left side are copied to the decoding block in a horizontal direction as predicted values; in Mode 2 (DC), the average value of 8 points A-D and I-L is used as predicted values of all points; and in Modes 3-8, the reference pixels are respectively copied, at a certain angle, to the corresponding positions of the decoding block. As some positions of the decoding block cannot exactly correspond to the reference pixels, it may be necessary to use a weighted average value of the reference pixels, or sub-pixels of interpolated reference pixels.

There are a total of 35 prediction modes for intra prediction used in HEVC, i.e., a planar mode, a DC mode, and 33 angular modes. There are a total of 67 prediction modes for intra prediction used in VVC, i.e., the planar mode, the DC mode, and 65 angular modes. There are a total of 66 prediction modes for intra prediction used in AVS3, i.e., the DC mode, the plane mode, a bilinear mode, and 63 angular modes.

It is to be noted that increase of the number of angular modes increases precision of intra prediction, better matching a demand for development of high definition and ultra high definition digital videos.

The residual unit 220 may generate a residual block of a CU based on a pixel block of the CU and a prediction block of a PU of the CU. For example, the residual unit 220 may generate a residual block of the CU, where each sample in the residual block equals a difference between a sample in the pixel block of the CU and a corresponding sample in the prediction block of the PU of the CU.

The transform/quantization unit 230 may quantize a transform coefficient. The transform/quantization unit 230 may quantize a transform coefficient related to a TU of the CU based on a quantization parameter (QP) related to the CU. The video encoder 200 may adjust the degree of quantization applied to a transform coefficient related to the CU by adjusting the QP related to the CU.

The inverse transform/quantization unit 240 may perform inverse quantization and inverse transform respectively on a quantized transform coefficient to reconstruct a residual block from the quantized transform coefficient.

The reconstructing unit 250 may generate a reconstructed encoding block related to a TU by adding samples of the reconstructed residual block to corresponding samples of one or more prediction blocks generated by the prediction unit 210. By reconstructing a sample block of each TU of the CU in this way, the video encoder 200 may reconstruct the pixel block of the CU.

The loop filtering unit 260 may perform deblocking filtering to reduce a blocking effect of a pixel block related to the CU.

In some embodiments, the loop filtering unit 260 may include a deblocking filtering unit, a sample adaptive offset (SAO) unit, and an adaptive loop filter (ALF) unit.

The decoded picture buffer 270 may store a reconstructed pixel block. The inter prediction unit 211 may perform inter prediction on a PU of another picture using a reference picture including the reconstructed pixel block. In addition, the intra prediction unit 212 may perform intra prediction on another PU in a picture same as the CU using a reconstructed pixel block in the decoded picture buffer 270.

The entropy coding unit 280 may receive the quantized transform coefficient from the transform/quantization unit 230. The entropy coding unit 280 may perform one or more entropy coding operations on the quantized transform coefficient to generate data resulting from entropy coding.

A basic flow of video coding according to the disclosure is as follows. At a coding side, a current picture may be partitioned into blocks. As for a decoding block, the prediction unit 210 may generate a prediction block of the decoding block through intra prediction or inter prediction. The residual unit 220 may compute a residual block, i.e., a difference between the prediction block and an original block of the decoding block, based on the prediction block and the original block. The residual block may also be referred to as residual information. A process such as transform and quantization by the transform/quantization unit 230, etc., may be performed on the residual block to remove information insensible to human eye to eliminate visual redundancy. In an example, a residual block before being transformed and quantized by the transform/quantization unit 230 (i.e., which is not transformed and quantized by the transform/quantization unit 230) may be referred to as a time-domain residual block. A time-domain residual block transformed and quantized by the transform/quantization unit 230 may be referred to as a frequency residual block or a frequency-domain residual block. When receiving the quantized transform coefficient output by the transform/quantization unit 230, the entropy coding unit 280 may perform entropy coding on the quantized transform coefficient and output a bitstream. For example, the entropy coding unit 280 may eliminate character redundancy according to probability information of a binary bitstream and a target context model.

In addition, the video encoder may acquire the residual block of the decoding block by performing inverse quantization and inverse transform on the quantized transform coefficient output by the transform/quantization unit 230, and then acquire a reconstructed block of the decoding block by adding the residual block of the decoding block and the prediction block of the decoding block. As coding progresses, a reconstructed block corresponding to another encoding block in the current picture may be acquired. A reconstructed picture of the current picture may be acquire d by splicing together the reconstructed blocks. An error is introduced in coding. To reduce the error, the reconstructed picture may be filtered such as with an ALF to reduce the difference between a pixel value of a pixel in the reconstructed picture and an original pixel value of the pixel in the current picture. The filtered reconstructed picture may be stored in the decoded picture buffer 270 as a reference picture of inter prediction for a subsequent picture.

It is to be noted that block partitioning information, mode information such as prediction, transform, quantization, entropy coding and loop filtering, or parameter information, which are determined on the coding end, need to be included in the bitstream if necessary. On the decoding end, block partitioning information, mode information such as prediction, transform, quantization, entropy coding and loop filtering, or parameter information, which are same as that on the coding end, are determined by parsing the bitstream and analyzing according to existing information, so as to ensure that the decoded picture obtained on the coding end is the same as the decoded picture obtained on the decoding end.

FIG. 3 is a schematic block diagram of a decoding framework 300 according to an embodiment of the disclosure.

As shown in FIG. 3, a video decoder 300 may include an entropy decoding unit 310, a prediction unit 320, an inverse quantization/transform unit 330, a reconstructing unit 340, a loop filtering unit 350, and a decoded picture buffer 360. It is to be noted that the video decoder 300 may include more functional components, less functional components, or different functional components.

The video decoder 300 may receive a bitstream. The entropy decoding unit 310 may parse the bitstream to extract a syntax element from the bitstream. As part of parsing the bitstream, the entropy decoding unit 310 may parse a syntax element in the bitstream that is entropy-coded. The prediction unit 320, the inverse quantization/transform unit 330, the reconstructing unit 340, and the loop filtering unit 350 may decode video data according to the syntax element extracted from the bitstream, i.e., generate the decoded video data.

In some embodiments, the prediction unit 320 may include an intra prediction unit 321 and an inter prediction unit 322.

The intra prediction unit 321 may perform intra prediction to generate a prediction block of a PU. The intra prediction unit 321 may generate the prediction block of the PU using an intra prediction mode based on a pixel block of a neighbouring PU in space. The intra prediction unit 321 may further determine the intra prediction mode of the PU according to one or more syntax elements acquired by parsing the bitstream.

The inter prediction unit 322 may build a first list of reference pictures (list 0) and a second list of reference pictures (list 1) according to one or more syntax elements acquired by parsing the bitstream. In addition, if the PU is encoded through inter prediction, the entropy decoding unit 310 may parse motion information of the PU. The inter prediction unit 322 may determine one or more reference blocks of the PU according to the motion information of the PU. The inter prediction unit 322 may generate the prediction block of the PU according to the one or more reference blocks of the PU.

The inverse quantization/transform unit 330 may perform inverse quantization on (i.e., dequantize) a transform coefficient related to a TU. The inverse quantization/transform unit 330 may determine the degree of quantization using a QP related to the CU including the TU.

After performing inverse quantization on the transform coefficient, the inverse quantization/transform unit 330 may perform one or more inverse transforms on the inverse-quantized transform coefficient, so as to generate a residual block related to the TU.

The reconstructing unit 340 may reconstruct the pixel block of the CU using the residual block related to the TU of the CU and the prediction block of the PU of the CU. For example, the reconstructing unit 340 may reconstruct the pixel block of the CU by adding a sample of the residual block to a corresponding sample of the prediction block, acquiring a reconstructed encoding block.

The loop filtering unit 350 may perform deblocking filtering to reduce a blocking effect of a pixel block related to the CU.

In some embodiments, the loop filtering unit 350 may include a deblocking filtering unit, a sample adaptive offset (SAO) unit, and an adaptive loop filter (ALF) unit.

The video decoder 300 may store a reconstructed picture of the CU in the decoded picture buffer 360. The video decoder 300 may use a reconstructed picture in the decoded picture buffer 360 as a reference picture for subsequent prediction, or transmit the reconstructed picture to a display apparatus for display.

A basic flow of video decoding according to the disclosure is as follows. The entropy decoding unit 310 may parse a bitstream to acquire a quantization coefficient matrix and prediction information of a decoding block, etc. The prediction unit 320 may generate a prediction block of the decoding block by performing intra prediction or inter prediction on the decoding block based on the prediction information. The inverse quantization/transform unit 330 may acquire a residual block by performing inverse quantization and inverse transform on the quantization coefficient matrix acquired from the bitstream. The reconstructing unit 340 may acquire a reconstructed block by adding the prediction block and the residual block. A reconstructed picture may be composed of reconstructed blocks. The loop filtering unit 350 may acquire a decoded picture by performing picture based or block based loop filtering on the reconstructed picture. The decoded picture may also be referred to as a reconstructed picture. The reconstructed picture may be displayed by a display device on one hand, and be stored in the decoded picture buffer 360 on the other hand as a reference picture of inter prediction for a subsequent picture.

The above is a basic flow of video codec in a block-based hybrid coding framework. With development of technology, some module or step of the framework or flow may be optimized. The disclosure applies, but is not limited, to the basic flow of video codec in the block-based hybrid coding framework.

Duality quantization involved in the disclosure is introduced below.

Dependent quantization (DQ), also referred to as duality quantization, is a quantization mode defined in VVC. Duality quantization is performed on a transformed block. Unlike conventional quantization, duality quantization includes two quantizers. The two quantizers have the same quantization step, but match transform coefficients in an interleaved manner. FIG. 4 is a schematic diagram of matching of quantizer Q0 and quantizer Q1 of duality quantization with transform coefficients.

Quantizer Q0 is matched to even multiples of a quantization step $\Delta$ and transform coefficient levels (i.e., digits corresponding to points A, B). Quantizer Q1 is matched to odd multiples of the quantization step $\Delta$ and transform coefficient levels (i.e., digits corresponding to points C, D).

By introducing two interleaved quantizers and a principle of inter-quantizer jump, DQ enables a quantizer with a large step to perform finer quantization, reducing a loss between a reconstructed transform coefficient and an original transform coefficient, thereby improving coding efficiency.

Each transform coefficient may be quantized using the two quantizers Q0, Q1 described in FIG. 4, and quantization using the two quantizers is similar to quantization using a conventional quantizer (such as, quantization in HEVC). A reconstructed coefficient of each of the two quantizers may be denoted by the quantization step Δ. The reconstructed coefficients of the two quantizers may be defined as follows.

A reconstruction level of the quantizer Q0 may be an even multiple of the quantization step Δ. When using the quantizer, a reconstructed transform coefficient t' may be computed according to a formula (1) as follows.

$$t' = 2 \cdot k \cdot \Delta \quad (1)$$

where k represents the related transform coefficient level in FIG. 4.

A reconstruction level of the quantizer Q1 may be an odd or zero multiple of the quantization step Δ. When using the quantizer, a reconstructed transform coefficient t' may be computed according to a formula (2) as follows.

$$t' = (2 \cdot k - \mathrm{sgn}(k)) \cdot \Delta \quad (2)$$

where sgn(·) represents a sign function.

$$\mathrm{sgn}(x) = \begin{cases} 1 & : x > 0 \\ 0 & : x = 0 \\ -1 & : x < 0 \end{cases}$$

Quantization using Q0 or Q1 is not controlled by a coding flag. Instead, it is decided whether to use Q0 or Q1 to quantize a coefficient to be coded through parity of the transform coefficient level (e.g., transform coefficient level in FIG. 4) of the previous coefficient in an order of coefficient scan.

FIG. 5 is a schematic diagram of state transition for determining a quantizer used for a transform coefficient, where (a) determining a quantizer using a state machine, and (b) a state transition table. The state of the next coefficient in the order of coefficient scan may be decided through a transfer method as shown in FIG. 5 by a reconstructed value of the current quantization coefficient. There may be a total of four states, denoted by 0, 1, 2, and 3, respectively. For example, the state of the current quantization coefficient is 2 and a coefficient level to be coded is 5. As 5 is an odd number, it is decided that the state of the next coefficient jumps to state 3. The state of the first coefficient in the scan order in each transform block may be set as an initial state (start state) 0. States 0, 1, 2, and 3 decide which quantizer is used to quantize the current coefficient. States 0 and 1 correspond to use of the quantizer Q0. States 2 and 3 correspond to use of the quantizer Q 1.

An encoder may decide duality quantization in a way similar to implementation of rate-distortion optimized quantization (RDOQ). The value of a transform coefficient level {$q_k$} minimizes a cost of Lagrange rate distortion of a formula (3) as follows.

$$J = D + \lambda \cdot R = \sum_k (t_k - t_k'(q_k | q_{k-1}, q_{k-2}, ...))^2 + \lambda \cdot R_k(q_k | q_{k-1}, q_{k-2}, ...) \quad (3)$$

$t_k$ and $q_k$ represent an original transform coefficient and an original transform coefficient level, respectively. $t_k'(q_k|...)$ represents a transform coefficient reconstructed under a coefficient level $q_k$ to be coded. $R_K(qk|...)$ represents an estimated number of bits to be consumed for coding $q_k$.

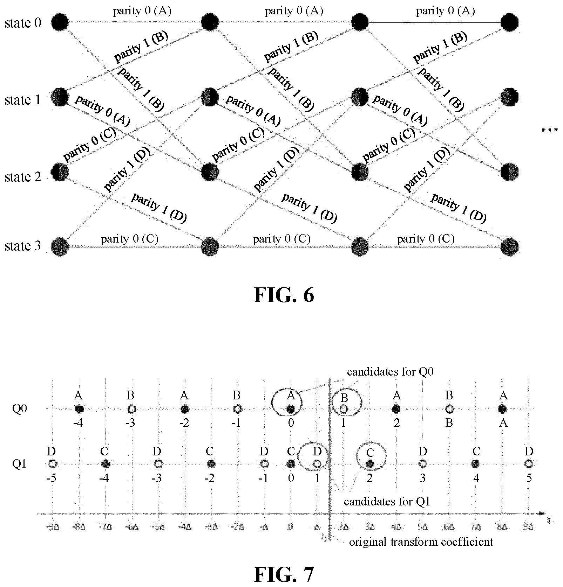

FIG. 6 is a schematic diagram of a dependency between states and transform coefficient levels represented by a grid structure, with a coding order from left to right. As the transition of the state machine as introduced above, the dependency between a quantizer and transform coefficient levels may be denoted by a grid diagram as shown in FIG. 6, four states in each column denote four possible states of the current quantization coefficient, and each node is connected to two possible state nodes of the next coefficient in the coding order. Given a current state and a coefficient $t_k$ to be coded, a corresponding transform coefficient level may be acquired by performing quantization using a current quantizer. The encoder may use an odd transform coefficient level or an even transform coefficient level. An odd transform coefficient level corresponds to B (Q0 with parity 1) and D (Q1 with parity 1) in FIG. 6. An even transform coefficient level corresponds to A (Q0 with parity 0) and C (Q1 with parity 0) in FIG. 6. After the cost

$$J_K(q_k) = (t_k - t_k'(q_k | ...))^2 + \lambda \cdot R_k(q_k | ...)$$ of all nodes is calculated, the transform coefficient level $q_k$ may be determined by finding a path with a minimum total cost. The minimum total cost may be determined through a Viterbi algorithm.

The specific implementation includes two steps as follows.

At S1, as shown in FIG. 7, 4 candidate transform coefficient levels corresponding to the original transform coefficient that come respectively from Q0 and Q1 may be found.

At S2, a series of transform coefficient levels $q_k$ of a current node may be determined using an estimated total rate-distortion (a total cost corresponding to determined transform coefficient levels of a previous node) through a Viterbi algorithm.

DQ technology as well as a process of determining a transform coefficient level of a transform coefficient is introduced above. On this basis, technical solutions according to embodiments of the disclosure are elaborated below with reference to the specific embodiments.

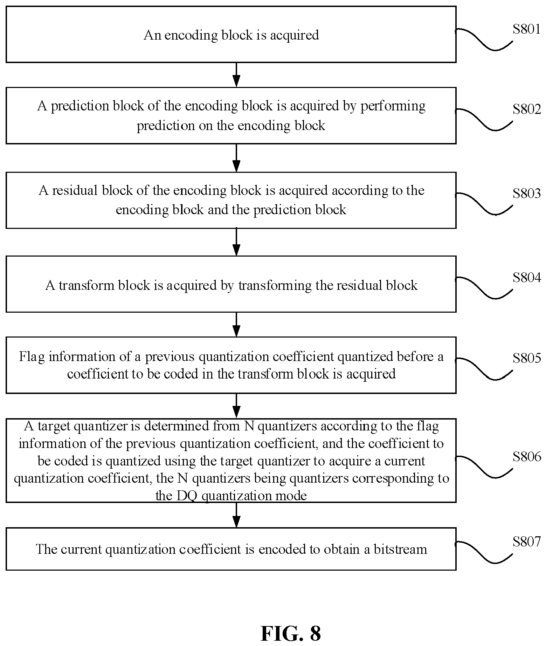

A coding side is introduced below with reference to FIG. 8.

FIG. 8 is a schematic flowchart of a method for encoding a video according to an embodiment of the disclosure. The embodiment of the disclosure may apply to a video encoder shown in FIG. 1 and FIG. 2. As shown in FIG. 8, the method according to the embodiments of the disclosure may include the following operations.

At S801, an encoding block is acquired.

At S802, a prediction block of the encoding block is acquired by performing prediction on the encoding block.

At S803, a residual block of the encoding block is acquired according to the encoding block and the prediction block.

At S804, a transform block is acquired by transforming the residual block.

At S805, flag information of a previous quantization coefficient quantized before a coefficient to be coded in the transform block is acquired.

At S806, a target quantizer is determined from N quantizers according to the flag information of the previous quantization coefficient, and the coefficient to be coded is quantized using the target quantizer to acquire a current quantization coefficient. The N quantizers are quantizers corresponding to the DQ quantization mode. N is a positive integer greater than or equal to 2.

At S807, the current quantization coefficient is encoded to obtain a bitstream.

In some embodiments, the current quantization coefficient according to the disclosure is also referred to as a quantization coefficient, or a quantized coefficient, or a current coefficient, or a coefficient to be coded, or a transform coefficient level, a reconstruction level, or a reconstruction rank, etc.

During video coding, a video encoder receives a video stream. The video stream includes a series of pictures. The video encoder performs video coding on each picture in the video stream. For ease of description, a picture to be coded currently is denoted as a current picture in the disclosure.

Specifically, referring to FIG. 2, the video encoder may partition the current picture into one or more encoding blocks (blocks to be coded). The prediction unit 210 in the video encoder may generate a prediction block of each encoding block through inter prediction and intra prediction, and send the prediction block to the residual unit 220. The residual unit 220 may be understood as a summator including one or more components performing subtraction. The residual unit 220 may subtract the prediction block from the encoding block to form a residual block, and send the residual block to the transform/quantization unit 230. The transform/quantization unit 230 may transform the residual block such as through discrete cosine transform (DCT) or similar transform to acquire a transform coefficient. The transform/quantization unit 230 may further quantize the transform coefficient to acquire a quantized transform coefficient, i.e., a quantization coefficient.

It is seen in FIG. 2 that the transform/quantization unit 230 may forward the quantized transform coefficient to the entropy coding unit 280. The entropy coding unit 280 may perform entropy coding on the quantized transform coefficient. For example, the entropy coding unit 280 may perform entropy coding on the quantized transform coefficient through context-based adaptive variable-length coding (CAVLC), context-based adaptive binary arithmetic coding (CABAC), syntax-based CABAC (SBAC), probability interval partitioning entropy (PIPE) coding, etc and obtain a bitstream.

The disclosure mainly relates to the above quantization process.

An existing design of DQ mainly includes three parts as follows.

1) Two interleaved quantizers Q0 and Q1.

2) Control of state transition using a state machine.

3) Coding of transform coefficient levels.

The disclosure mainly propose a new method for part 1, part 2, and part 3 in the DQ design, including use of a new interleaved quantizer, a new method for controlling state transition using a state machine, and a new coefficient coding method.

In some embodiments, in terms of coefficient coding, the disclosure follows an existing mode of coefficient coding in an existing standard, where coding a coefficient includes coding syntax elements of the coefficient. The syntax elements of the coefficient may include: a non-zero coefficient flag (also referred to as a significant flag) sig_flag, a coefficient absolute value greater than 1 flag (also referred to as a greater_than_1 flag or greater than 1 flag) coeff_abs_level_greater1_flag, a coefficient absolute value greater than 2 flag (also referred to as a greater_than_2 flag or greater than 2 flag) coeff_abs_level_greater2_flag, a coefficient absolute value remaining value coeff_abs_level_remaining, and a positive/negative flag (i.e., sign flag) sign date. The significant flag sig_flag indicates whether a current quantization coefficient is zero. In some embodiments, a value '0' of the significant flag represents that the current quantization coefficient is '0', and a value '1' of the significant flag represents that the current quantization coefficient is non-zero. A value '0' of coeff_abs_level_greater1_flag represents that the absolute value of the current quantization coefficient is '1', and a value '1' of coeff_abs_level_greater1_flag represents that the absolute value of the current quantization coefficient is greater than 1. A value '0' of coeff_abs_level_greater2_flag represents that the absolute value of the current quantization coefficient is '2', and a value '1' of coeff_abs_level_greater2_flag represents that the absolute value of the current quantization coefficient is greater than 2. If the current quantization coefficient has a coefficient absolute value remaining value, the absolute value of the current quantization coefficient is 3+coeff_abs_level_remaining. A value '0' of sign date represents that the current quantization coefficient is negative, and a value '1' of sign date represents that the current quantization coefficient is positive.

In some embodiments, the disclosure proposes that a quantizer may quantize a transformed coefficient, i.e., a transform coefficient.

In some embodiments of the disclosure, transform skip coefficients may be quantized.

The N quantizers according to the disclosure are quantizers corresponding to the DQ quantization mode.

In some embodiments, at least one quantizer of the N quantizers may be a non-zero quantizer configured to quantize each transform coefficient into a non-zero quantization coefficient. N is a positive integer greater than or equal to 2. A non-zero quantizer may also be referred to as a non-zero-point quantizer.

In some embodiments, at least one quantizer of the N quantizers may be a zero-point quantizer configured to quantize a transform coefficient into zero.

In some embodiments, the N quantizers may include one zero-point quantizer and one non-zero quantizer.

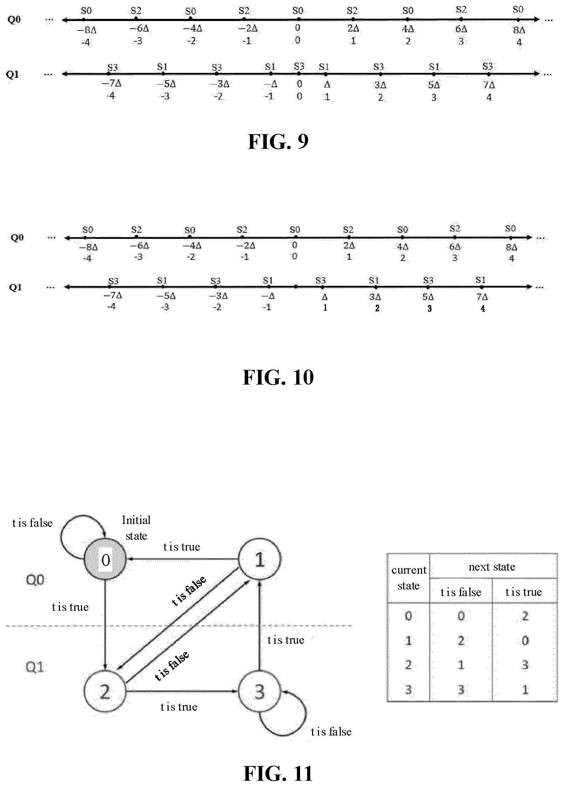

FIG. 9 is a schematic diagram of quantizers Q0 and Q1 in the related DQ technology. Compared to FIG. 9, in some embodiments, N=2, that is, the disclosure proposes that just one of the two quantizers has a zero point. That is, one quantizer may quantize a coefficient into zero, and such a quantizer is referred to as a zero-point quantizer. The other quantizer may not quantize a coefficient into zero, and such a quantizer is referred to as a non-zero quantizer.

In some embodiments, as shown in FIG. 10, the N quantizers include quantizer Q0 and quantizer Q1. No change is made to quantizer Q0, while a point quantized to 0 is removed from quantizer Q1. That is, quantizer Q1 may quantize a coefficient into just a non-zero coefficient. Q0 may be a zero-point quantizer. Q1 may be a non-zero quantizer.

In some embodiments, Q0 may be a non-zero quantizer. That is, quantizer Q0 has no zero point, and quantizer Q1 has a zero point.

In some embodiments, two quantizers both have no zero point. That is, both Q0 and Q1 may be non-zero quantizers.

In an example, the number of the quantizers may increase. There may be two or more quantizers. In case of more than two quantizers, i.e., N being greater than 2, there may be one or more zero-point quantizers in the N quantizers.

In some embodiments, a previous quantization coefficient may be construed, according to a quantization order (or a scan order), as a quantized transform coefficient immediately preceding the coefficient to be coded.

In some embodiments, the operation at S806 that the target quantizer is determined from N quantizers according to the flag information of the previous quantization coefficient, and the coefficient to be coded is quantized using the target quantizer may include the operations at S806-A1 to S806-A4 as follows.

At S806-A1, a state of the previous quantization coefficient is acquired.

At S806-A2, a state of the current quantization coefficient is determined according to the flag information of the previous quantization coefficient and the state of the previous quantization coefficient.

At S806-A3, the target quantizer is determined from the N quantizers according to the state of the current quantization coefficient.

At S806-A4, the coefficient to be coded is quantized using the target quantizer.

In actual coding, the coding device may determine the target quantizer used in current quantization according to a current state of a state machine. When attempting quantization, a non-zero quantizer cannot quantize a coefficient into zero.

A state of a quantization coefficient may be denoted by the state machine. That is, the state of the state machine may be understood as the state of the quantization coefficient.

In an example, an initial state of the state machine may be 0.

In some embodiments, the bitstream may include the initial state of the state machine. For example, the initial state of the state machine may be 0, such that the initial state of the state machine at the decoding side is consistent with that at the coding side, thus guaranteeing accurate coefficient decoding by the decoding side.

In the disclosure, as the previous quantization coefficient of the current quantization coefficient is already encoded, and has a known state, the coding device may acquire the state of the previous quantization coefficient.

In some embodiments, flag information of a quantization coefficient may include at least one of: a non-zero coefficient flag (also referred to as a significant flag, sig flag for short), or at least one coefficient absolute value greater than i flag (also referred to as greater_than_i flag or Greater than i flag, gti flag for short). i=1, 2,..., M. M may be a positive integer. The significant flag may indicate whether the quantization coefficient is zero, or whether a transform coefficient level exists. A greater_than_i flag may indicate whether an absolute value of the quantization coefficient is greater than the positive integer i, or whether a transform coefficient level is greater than i.

In an example, the flag information of the previous quantization coefficient may include a significant flag, a coefficient absolute value greater than 1 flag (also referred to as a greater_than_1 flag or greater than 1 flag, gt1 flag for short), a coefficient absolute value greater than 2 flag (also referred to as a greater_than_2 flag or greater than 2 flag, gt2 flag for short) of the previous quantization coefficient.

In an example, the flag information of the previous quantization coefficient may include a Sig flag, a gt1 flag, a gt2 flag, a gt3 flag, ..., a gtM flag of the previous quantization coefficient. M may be greater than 3.

In some embodiments, the operation at S806-A2 that the state of the current quantization coefficient is determined according to the flag information of the previous quantization coefficient and the state of the previous quantization coefficient may include, but not limited to, a mode as follows.

In mode 1, if a value of Sig flag in the flag information of the previous quantization coefficient is 0, the state of the current quantization coefficient may be determined according to the state of the previous quantization coefficient. For example, the state of the current quantization coefficient may be determined to be 0 when the state of the previous quantization coefficient is 0. The state of the current quantization coefficient may be determined to be 2 if the state of the previous quantization coefficient is 1. The state of the current quantization coefficient may be determined to be 1 if the state of the previous quantization coefficient is 2. The state of the current quantization coefficient may be determined to be 3 if the state of the previous quantization coefficient is 3.

In mode 2, the operation at S806-A2 may include the operations at S806-A21 and S806-A22 as follows.

At S806-A21, a state jump value is determined according to the flag information of the previous quantization coefficient.

At S806-A22, the state of the current quantization coefficient is determined according to the state of the previous quantization coefficient and the state jump value.

In an example, the flag information of the previous quantization coefficient includes the significant flag. It may be determined that the state jump is 0 if the value of the significant flag is 0.

In another example, the flag information of the previous quantization coefficient includes a significant flag and a greater_than_1 flag. In such case, the state jump value may be determined to be 1 if values of the significant flag and the greater_than_1 flag meet a formula (1). The state jump value may be determined to be 0 if values of the significant flag and the greater_than_1 flag do not meet the formula (4).

$$t = sigflag == 1\&\&gt1 == 0 \quad (4)$$

t is the state jump value, sigflag is a value of the significant flag, and gt1 is a value of the greater_than_1 flag (i.e., gt1 flag).

In another example, the flag information of the previous quantization coefficient includes a significant flag and first M coefficient absolute value greater than i flags (also referred to as M greater_than_i flags). The state jump value may be determined to be 1 if a value of the significant flag is 1, values of first M-1 greater_than_i flags are 1, and a value of the M-th greater_than_i flag is 0. M may be a positive integer greater than or equal to 2. Assuming that M=3, the flag information of the previous quantization coefficient may include the sigflag, the gt1 flag, the gt2 flag, and the gt3 flag. If the flag information of the previous quantization coefficient meets a formula (5), it may be determined that the state jump value t=1. If the flag information of the previous quantization coefficient does not meet the formula (5), it may be determined that the state jump value t=0.

$$t = sigflag == 1\&\&gt1 == 1\&\&gt2 == 1\&\&gt3 == 0 \quad (5)$$

gt2 is the value of the greater_than_2 flag (i.e., gt2 flag). gt3 is the value of the greater_than_3 flag (i.e., gt3 flag).

After t is determined in this way, the state of the current quantization coefficient may be determined according to t and the state of the previous quantization coefficient.

In the disclosure, state transition, i.e., stateTrans in Table 2 (state transition table), may be performed by the state machine as shown in FIG. 11. For example, as shown in FIG. 11, t=1 may denote that t is true. t=0 may denote that t is false. Thus, it may be determined whether t is true or false according to formula (4) or (5). The state of the current quantization coefficient may be determined according to the Boolean value of t and the state of the previous quantization coefficient. For example, when t is true and the state of the previous quantization coefficient is 2, the state of the current quantization coefficient may be 3.

In some embodiments, a state of a state machine may be updated according to a state of the current quantization coefficient.

In some embodiments, to quantize a coefficient through DQ, first it is to be determined whether quantization according to the disclosure may be performed through DQ, which may specifically include the following operations.

At S11, an identifier of a transform tool used by the transform block, and/or SRx or SRy of a scan region of the transform block in a luma component and SRx or SRy of a scan region of the transform block in a chroma component are acquired.

At S12, it is determined whether the transform block meets a preset condition according to the identifier of the transform tool used by the transform block, and/or SRx or SRy of the scan region of the transform block in the luma component and SRx or SRy of the scan region of the transform block in the chroma component.

At S13, it is determined that the transform block may be quantized through the DQ quantization mode if the transform block meets the preset condition.

At S14, when it is determined that the transform block may adopt the DQ quantization mode, the target quantizer is determined from the N quantizers according to the flag information of the previous quantization coefficient, and the coefficient to be coded may be quantized using the target quantizer.

The preset condition may include any one condition as follows.

In condition 1, the chroma component of the transform block is considered; or the transform block is a non-transform skip block, and the transform tool used by the transform block is not an implicit selection of transform (IST) tool and/or a sub-block transform (SBT) tool.

In condition 2, SRx or SRy of the scan region of the transform block in the luma component is greater than Q and SRx or SRy of the scan region of the transform block in the chroma component is greater than P, and the transform block is a non-transform skip block. Both Q and P are integers.

Values of Q and P are not limited in the disclosure.

For example, Q may be 6, and P may be 0.

In some embodiments, at least one of M, P, or a DQ enabled flag may be stored in a sequence header or a picture header. The DQ enabled flag indicates whether a current sequence enables the DQ quantization mode.

For example, the DQ enabled flag may be coded in the sequence header, indicating that the current sequence enables DQ. In determining, based on the size of a scan region, whether to apply DQ on a current transform block, scan region size limits Q (size luma dep_quant) and P (size_chroma_dep_quant) may also be coded in the sequence header, as shown in table 1 follows, for example.

Table 1 Sequence header definition

| Sequence header definition | Descriptor |
|---|---|
| sequence_header () { | |
| ... | |
| dep_quant flag | u(1) |
| if ( dep_quant_flag) { | |
| size luma dep_quant | u(3) |
| size_chroma_dep_quant | u(3) |
| } | |
| ... | |

In this case, the operation at S12 may include operations as follows. The DQ enabled flag in the sequence header may be acquired. When it is determined, according to the DQ enabled flag, that the current sequence enables the DQ, it may be determined whether the transform block meets the preset condition according to the identifier of the transform tool used by the transform block, or SRx or SRy of the scan region of the transform block in the luma component and SRx or SRy of the scan region of the transform block in the chroma component. When it is determined that the DQ quantization mode may be used for quantization in the disclosure, the current quantization coefficient may be acquired by quantizing the coefficient to be coded according to the above operations.

Next, a syntax element of the current quantization coefficient may be encoded.

In some embodiments, the flag information of the current quantization coefficient may include a significant flag (sig flag), a greater_than_1 flag (gt1 flag), a greater_than_2 flag (gt2 flag), a coefficient absolute value remaining value, and a sign flag. Then, the current quantization coefficient may be encoded by 3 steps as follows.

At S1, a significant flag (sig flag), a greater_than_1 flag (gt1 flag), and a greater_than_2 flag (gt2 flag) of the current quantization coefficient are encoded based on a context model. A state of a state machine is updated according to the state of the current quantization coefficient.

At S2, a (remaining) part of the current quantization coefficient that has an absolute value greater than 2 (i.e., a coefficient absolute value remaining value of the current quantization coefficient) is encoded.

At S3, sign data (i.e., a sign flag) of the current quantization coefficient is encoded.

It is to be noted that the disclosure does not limit an order in which the above S1, S2, and S3 are implemented.

In an example, S1 is implemented before S2 and S3. Thus, in decoding a coefficient, the decoding side first may acquire sig flag, gt1 flag, and gt2 flag through decoding, and determine the state of the current quantization coefficient to be decoded based on the sig flag, gt1 flag, and gt2 flag, thus accelerating decoding.

In the disclosure, the significant flag and the at least one greater_than_i flag may be encoded as one coding part.

In some embodiments, the sig flag may be encoded using a first context model.

Illustratively, the first context model may be identical to/same as a context model used in encoding the significant flag through rate-distortion optimized quantization (RDOQ). Alternatively, the first context model may differ from the context model used in encoding the significant flag through RDOQ.

For example, the high-performance model (HPM) with reference to AVS only has the RDOQ quantization mode, and thus there is just one context model. After introduction of DQ, sig flag coding through DQ and through RDOQ may share one context model. Alternatively, a new context model may be introduced for sig flag coding through DQ.

In some embodiments, the at least one greater_than_i flag may be encoded using a second context model. For example, gt1 flag and gt2 flag may be encoded using the second context model.

Illustratively, the second context model may be identical to a context model used in encoding a greater_than_i flag through RDOQ. Alternatively, the second context model may differ from the context model used in encoding the greater_than_i flag through RDOQ. Alternatively, the second context model may include a context model corresponding to a non-zero quantizer and a context model corresponding to a zero-point quantizer. The context model corresponding to the non-zero quantizer may differ from the context model used in encoding the greater_than_i flag through RDOQ, and the context model corresponding to the zero-point quantizer may be identical to the context model used in encoding the greater_than_i flag through RDOQ. Alternatively, the context model corresponding to the non-zero quantizer, the context model corresponding to the zero-point quantizer, and the context model used in encoding the greater_than_i flag through RDOQ may differ from each other.

For example, there is just RDOQ in the HPM, and gt1flag coding and gt2flag coding share one context model. After introduction of DQ, 1) gt1flag and gt2flag coding through DQ and through RDOQ may share one context model; 2) gt1flag and gt2flag coding through RDOQ and with a zero-point quantizer of DQ may share one context model, while gt1flag and gt2flag coding with a non-zero quantizer of DQ may share another context model; 3) or, gtlflag and gt2flag coding through RDOQ, gtlflag and gt2flag coding with a zero-point quantizer of DQ, and gt1flag and gt2flag coding with a non-zero quantizer of DQ may each use one context model, respectively.

In the disclosure, the significant flag and the at least one greater_than_i flag may be encoded as one coding part, lowering coding complexity compared to the existing 4-part coding, thereby improving coding and decoding efficiency.

In some embodiments, the bitstream may include a non-zero quantizer identifier. The non-zero quantizer identifier may identify whether the target quantizer is a non-zero quantizer.

In some embodiments, sig_flag coding may be skipped in two cases as follows.

In case 1, the state of the current quantization coefficient may be acquired according to the state of the previous quantization coefficient in the scan order, thereby determining whether the target quantizer is a non-zero quantizer. For example, the target quantizer is determined to be the zero-point quantizer for a state 0 or 1 of the current quantization coefficient. For example, the target quantizer is determined to be the non-zero quantizer for a state 2 or 3 of the current quantization coefficient. Coding of the sig_flag may be skipped and the value of the sig_flag may be taken as 1 by default when the target quantizer is determined to be the non-zero quantizer.

In case 2, coding of the sig_flag may be skipped and the value of the sig_flag may be taken as 1 by default when only a top-right coefficient in a rightmost column of the current scan region is non-zero or only a bottom-left coefficient in a bottommost row of the current scan region is non-zero.

That is, in the disclosure, in coding a coefficient quantized using the non-zero quantizer, the encoder knows that the absolute value of minimum data quantized by the non-zero quantizer is 1, i.e., that all coefficients quantized by the non-zero quantizer are non-zero (significant). Therefore, the significant flag sig_flag of the coefficient quantized by the non-zero quantizer does not need to be encoded, thereby saving a codeword.

In some embodiments, change in the syntax structure of the transform block made in the solution is as shown in Table 2.

Table 2 Transform block definition

| Transform block definition | Descriptor |
|---|---|
| block(i, blockWidth, blockHeight, CuCtp, isChroma, isPcm, isIntra, component) { | |
| ... | |
| if (SrccEnableFlag) { | |
| **scan_region_x** | ae(v) |
| **scan_region_y** | ae(v) |
| initScanOrder(ScanOrder, scan_region_x+1, scan_region_y+1, blockWidth) | |
| lastScanPos=((scan_region_x+1)*(scan_region_y+1 ))-1 | |
| lastSet=lastScanPos>>4 | |
| is_last_x=0 | |
| is _last_y=0 | |
| escapeDataPresent=0 | |
| NumEvenCoeff=0 | |
| state=0 | |
| state _update=0 | |
| if (DqEnableFlag &&(isChroma||(!isChroma&&(scan_region_ x>= 6∥scan_region_y>=6))) | |
| state_update=1 | |
| for (i=lastset; i>=0; i--) { | |
| setPos=i<<4 | |
| firstSigScanPos=16 | |
| lastSigScanPos=-1 | |
| set_nz[i]=0 | |
| set_gt2[i]=0 | |
| Pre5NumGt0[5]={0, 0, 0, 0, 0} | |
| Pre5NumNz[5]={0, 0, 0, 0, 0} | |
| for(n=(i==lastSet?lastScanPos-setPos:15); n>=0; n--) { | |
| blkpos=ScanOrder[setPos+n]; | |
| Pos_x=blkpos&(blockWidth-1) | |
| Pos_y=blkpos>>log2width | |
| if((Pos_x==0&&sy==scan_region_y&&is _last_y==0) ∥(Pos_y==0&&Pos_x==scan region x &&is_last_x==0) ∥(state>>1)) { | |
| sig_flag[blkpos]=1 | |

(continued)

| Transform block definition | Descriptor |
|---|---|
| } | |
| else { | |
| **sig_flag**[blkpos] | ae(v) |
| } | |
| abs_coef[blkpos]+=sig_flag[blkpos] | |
| if (sig_flag[blkpos]) { | |
| **coeff_abs_level_greaterl_flag[blkpos]** | ae(v) |
| abs_coef[blkpos]+=coeff_abs_level_greater1_flag[blkpos] | |
| if(coeff_abs_level_greater1_flag[blkpos]) | |
| **coeff_abs_level_greater2_flag[blkpos]** | ae(v) |
| abs_coef[blkpos]+=coeff_abs_level_greater2_flag[blkpos] | |
| if(coeff_abs_level_greater2_flag[blkpos]) | |
| set_gt2[i]++ | |
| if (Pos_x==scan _region_x) | |
| is_last_x=1 | |
| if (Pos_y==scan _region_y) | |
| is_last_y=1 | |
| if (lastSigScanPos==-1) | |
| lastSigScanPos=n | |
| firstSigScanPos=n | |
| set_nz[i]++ | |
| for (j=4; j>0; j++) { | |
| Pre5NumNz[j]=Pre5NumNz[j-1] | |
| } | |
| Pre5NumNz[0]=1+coeff_abs_level_greater1_flag[blkpos]+ coeff_abs_level_greater2 _flag[blkpos] | |
| } | |
| for (j=4; j > 0; j++) { | |
| Pre5NumGt0[j]=Pre5NumNzGt0[j-1] | |
| } | |
| Pre4NumGt0[0]=sig_flag[blkpos] | |
| if (state_update) { | |
| t=sig_flag[blkpos]&&!coeff_abs_lev el_greater1_flag[blkpos] | |
| state=stateTrans[state] [t] | |
| } | |
| } | |
| if (set_gt2[i]) { | |
| for(n=(i==lastSet?lastScanPos-setPos:15); n>=0; n--){ | |
| blkpos=ScanOrder[setPos+n] | |

(continued)

| Transform block definition | Descriptor |
|---|---|
| if(coeff_abs_level_greater2_flag[blkp os]) { | |
| **coeff_abs_level_remainin g[blkpos]** | ue(v) |
| abs_coef[blkpos]+=coeff_a bs_level_remaining[blkpos] | |
| } | |
| } | |
| } | |
| for n=(i==lastSet?lastScanPos-setPos:15); n>=0; n--) { | |
| blkpos=ScanOrder[setPos+n] | |
| if (sig_ flag[blkpos]) { | |
| Pos_x=blkpos&(blockwidth-1) | |
| Pos_y=blkpos>>log2width | |
| **coeff_sign[blkpos]** | ae(v) |
| QuantCoeffMatrix[Pos _x][Pos_y]=coeff_sign[blkpos]? -abs_coef[blkpos]:abs_coef[blkpos] | |
| } | |
| } | |
| } | |
| for (x=0; x<$M_1$; x++) { | |
| for (y=0; y<M2; y++) { | |
| blkpos=y* M1+ x | |
| AbsLevel= abs_coef[blkpos] | |
| QuantCoeffMatrix[x][y]=coeff_sign [blkpos]?-AbsLevel:AbsLevel | |
| if (QuantCoeffMatrix[x][y]%2==0) { | |
| NumEvenCoeff++ | |
| } | |
| } | |
| } | |
| if (SbtCuFlag) { | |
| SbtPosFlag=NumEvenCoeff % 2?0:1 | |
| } | |
| if (isIstApply) { | |
| IstTuFlag=(!PictureIstSkipEnableFlag&&(scan _region_x >=16‖scan_region_y >=16))?0:NumEvenCoeff % 2?0:1 | |
| if (PictureIstSkipEnableFlag&&IntraCuFlag) { | |
| IstTuFlag=EnhancedTsFlag?(IstTuFlag?2: 1):0 | |
| } | |
| } | |
| } | |

In Table 2, DqEnableFlag may be a condition for enabling DQ in a current sequence, and has a value of dep_quant _flag encoded in the sequence header.

Table 2 includes alteration made by the disclosure to the transform coefficient level decoding in AVS3 spec, which mainly involves putting sigflag, gt1 flag, and gt2 flag coded and decoded based on a context model in one part, and putting the remaining based on exponential-Golomb coding and decoding in another part.

In the table, state represents the current state of the state machine. (state>>1) in Table 2 represents whether the quantizer corresponding to the current state is a non-zero quantizer, such as quantizer Q1.

Technical solutions of the disclosure improve the existing quantizer. In coding, it may be determined, according to a quantizer in duality quantization used for a current quantization coefficient, whether the current quantization coefficient must be a non-zero coefficient, and coding of a significant flag may be skipped according to the information, thereby saving a codeword and improving efficiency of the encoder. Meanwhile, in quantizing a coefficient to be coded according to the disclosure, the current quantization coefficient is acquired by acquiring the flag information of the previous quantization coefficient of the coefficient to be coded, determining, according to the flag information of the previous quantization coefficient, a target quantizer in N quantizers for quantizing the coefficient to be coded, and quantizing the coefficient to be coded using the target quantizer. That is, in the disclosure, to determine the target quantizer, it is only required to obtain the flag information of the previous quantization coefficient, without waiting till decoding of the flag information of the current quantization coefficient completes, thus lowering coding and decoding complexity, improving coding and decoding efficiency.

The method for encoding a video according to embodiments of the disclosure is described above. On this basis, a method for decoding a video at a decoding side according to the disclosure is described below.

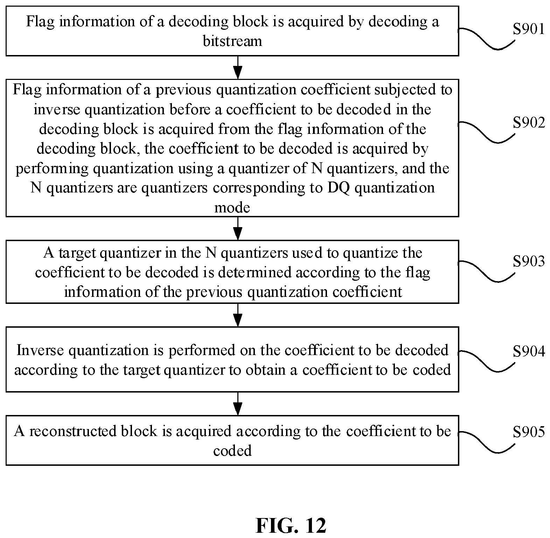

FIG. 12 is a schematic flowchart of a method for decoding a video according to an embodiment of the disclosure. As shown in FIG. 12, the method according to the embodiment of the disclosure may include the following operations.

At S901, flag information of a decoding block is acquired by decoding a bitstream.

At S902, flag information of a previous quantization coefficient subjected to inverse quantization before a coefficient to be decoded in the decoding block is acquired from the flag information of the decoding block. The coefficient to be decoded is acquired by performing quantization using a quantizer of N quantizers. The N quantizers are quantizers corresponding to DQ quantization mode. N is a positive integer greater than or equal to 2.

At S903, a target quantizer in the N quantizers used to quantize the coefficient to be decoded is determined according to the flag information of the previous quantization coefficient.

At S904, inverse quantization is performed on the coefficient to be decoded according to the target quantizer to obtain a coefficient to be coded.

At S905, a reconstructed block is acquired according to the coefficient to be coded.

Specifically, referring to FIG. 3, in the decoder, the entropy decoding unit 310 may parse a bitstream to acquire a quantization coefficient matrix and prediction information or the like of a decoding block in the current picture. The prediction unit 320 may generate a prediction block of the decoding block by performing intra prediction or inter prediction on the decoding block based on the prediction information. The inverse quantization/transform unit 330 may acquire a residual block by performing inverse quantization and inverse transform on the quantization coefficient matrix acquired from the bitstream. The reconstructing unit 340 may acquire a reconstructed block by adding the prediction block and the residual block. A reconstructed block of another encoding block in the current picture may be acquired similarly. A reconstructed picture may be formed by respective reconstructed blocks.

In some embodiments, at least one quantizer of the N quantizers may be a non-zero quantizer configured to quantize each transform coefficient into a non-zero (significant) quantization coefficient.

In some embodiments, at least one quantizer of the N quantizers may be a zero-point quantizer configured to quantize a transform coefficient into zero.

In some embodiments, the N quantizers may include one zero-point quantizer and one non-zero quantizer.

In some embodiments, according to a scan order in a scan region, the previous quantization coefficient may be an inverse-quantized previous quantization coefficient immediately preceding the coefficient to be decoded according to the scan order.

In the disclosure, as the previous quantization coefficient of the coefficient to be coded is already acquired through decoding, the decoding device may acquire the flag information of the previous quantization coefficient.

In some embodiments, there may be a non-zero coefficient flag (also referred to as a significant flag, Sig flag for short) and at least one coefficient absolute value greater than i flag (also referred to as greater_than_i flag or Greater than i flag, gti flag for short). i=1, 2,..., M. M may be a positive integer. The significant flag may indicate whether the quantization coefficient is zero, or whether a transform coefficient level exists. A greater_than_i flag may indicate whether an absolute value of the quantization coefficient is greater than the positive integer i, or whether a transform coefficient level is greater than i.

In an example, the flag information of the previous quantization coefficient may include a significant flag, a coefficient absolute value greater than 1 flag (also referred to as a greater_than_1 flag or Greater than 1 flag, gt1 flag for short), a coefficient absolute value greater than 2 flag (also referred to as a greater_than_2 flag or Greater than 2 flag, gt2 flag for short) of the previous quantization coefficient.

In an example, the flag information of the previous quantization coefficient may include a Sig flag, a gt1 flag, a gt2 flag, a gt3 flag, ..., a gtM flag of the previous quantization coefficient. M may be greater than 3.

In some embodiments, the operation at S903 may include the following operations at S903-A1 to S903-A4.

At S903-A1, a state of the previous quantization coefficient is acquired.

At S903-A2, a state of the coefficient to be decoded is determined according to the flag information of the previous quantization coefficient and the state of the previous quantization coefficient.

At S903-A3, the target quantizer is determined from the N quantizers according to the state of the coefficient to be decoded.

The state of the quantization coefficient may be understood as the state of the state machine.

In an example, an initial state of the state machine may be 0.

In some embodiments, the bitstream may include the initial state of the state machine. For example, the initial state of the state machine may be 0.

In the disclosure, as the previous quantization coefficient is already decoded, and has a known state, the decoding device may acquire the state of the previous quantization coefficient.

In some embodiments, the operation at S903-A2 is implemented in a mode including but not limited to a mode as follows.

In mode 1, if a value of Sig flag in the flag information of the previous quantization coefficient is 0, the state of the coefficient to be decoded may be determined according to the state of the previous quantization coefficient. For example, the state of the coefficient to be decoded may be determined to be 0 when the state of the previous quantization coefficient is 0. The state of the coefficient to be decoded may be determined to be 2 if the state of the previous quantization coefficient is 1. The state of the coefficient to be decoded may be determined to be 1 if the state of the previous quantization coefficient is 2. The state of the coefficient to be decoded may be determined to be 3 if the state of the previous quantization coefficient is 3.

In mode 2, the operation at S903-A2 may include the operations at S903-A21 and S903-A22 as follows.

At S903-A21, a state jump value is determined according to the flag information of the previous quantization coefficient.

At S903-A21, the state of the coefficient to be decoded is determined according to the state of the previous quantization coefficient and the state jump value.

In an example, it is determined that the state jump value is 0 if the flag information of the previous quantization coefficient includes the significant flag and the value of the significant flag is 0.

In another example, the flag information of the previous quantization coefficient includes the significant flag and a greater_than_1 flag, the state jump value is determined to be 1 if values of the significant flag and the greater_than_1 flag meet the formula (6), and the state jump value is determined to be 0 if values of the significant flag and the greater_than_1 flag do not meet the formula (6).

$$t = sigflag == 1\&\&gt1 == 0 \quad (6)$$

t is the state jump value, sigflag is a value of the significant flag, and gt1 is a value of the greater_than_1 flag.

In the mode, the Boolean value of the variable t depends on whether the previous coefficient is 1 in decoding. Whether the previous coefficient is 1 may be determined through values of sig_flag and coeff_abs_level_greater1_flag (gt1 flag), without reconstructing each coefficient to be decoded, thus lowering quantization complexity, and providing decoding efficiency.

In another example, the flag information of the previous quantization coefficient includes a significant flag and first M coefficient absolute value greater than i flags. The state jump value may be determined to be 1 if a value of the significant flag is 1, values of first M-1 greater_than_i flags are 1, and a value of the M-th greater_than_i flag is 0. M may be a positive integer greater than or equal to 2. Assuming that M=3, the flag information of the previous quantization coefficient may include the sigflag, the gt1 flag, the gt2 flag, and the gt3 flag. If the flag information of the previous quantization coefficient meets a formula (7), it may be determined that the state jump value t=1. If the flag information of the previous quantization coefficient does not meet the formula (7), it may be determined that the state jump value t=0.

$$t = sigflag == 1\&\&gt1 == 1\&\&gt2 == 1\&\&gt3 == 0 \quad (7)$$

After t is determined in this way, the state of the coefficient to be decoded may be determined according to t and the state of the previous quantization coefficient.

In the disclosure, state transition, i.e., stateTrans in Table 1 (state transition table), may be performed by the state machine as shown in FIG. 11. For example, as shown in FIG. 11, t=1 may denote that t is true. t=0 may denote that t is false. Thus, it may be determined whether t is true or false according to formula (6) or (7). The state of the coefficient to be decoded may be determined according to the Boolean value of t and the state of the previous quantization coefficient. For example, when t is true and the state of the previous quantization coefficient is 2, the state of the coefficient to be decoded may be 3.

In some embodiments, a state of a state machine is updated according to a state of the coefficient to be decoded.

In some embodiments, to perform decoding, first it is to be determined whether DQ is adopted by the coding side. That is, the disclosure may further include the following operations before the operation at S903.

At S21, the bitstream is parsed to obtain an identifier of a transform tool used by a transform block, and/or SRx or SRy of a scan region of the transform block in a luma component and SRx or SRy of a scan region of the transform block in a chroma component.

At S22, it is determined whether the transform block meets a preset condition according to the identifier of the transform tool used by the transform block, and/or SRx or SRy of the scan region of the transform block in the luma component and SRx or SRy of the scan region of the transform block in the chroma component.

If the transform block meets the preset condition, the operation at S903 may be implemented. That is, the target quantizer used to quantize the coefficient to be decoded is determined from the N quantizers according to the flag information of the previous quantization coefficient.

In some embodiments, the preset condition may include any one condition as follows.

In condition 1, the chroma component of the transform block is considered; or the transform block is a non-transform skip block, and the transform tool used by the transform block is not an implicit selection of transform (IST) tool and/or a sub-block transform (SBT) tool.

In condition 2, SRx or SRy of the scan region of the transform block in the luma component is greater than Q and SRx or SRy of the scan region of the transform block in the chroma component is greater than P, and the transform block is a non-transform skip block. Both Q and P are integers.

Values of Q and P are not limited in the disclosure.

For example, Q may be 6, and P may be 0.

In some embodiments, Q and P are default values.

In some embodiments, at least one of Q, P, or a DQ enabled flag may be stored in a sequence header or a picture header. The DQ enabled flag indicates whether a current sequence enables the DQ quantization mode.

In some embodiments, the sequence header is as shown in Table 1. The decoding device may first decode the sequence header as shown in Table 1 to acquire at least one of Q, P, or the DQ enabled flag. For example, it may be determined according to the DQ enabled flag whether the current sequence enables the DQ quantization mode. If it is determined that the current sequence enables the DQ quantization mode, it may be determined whether the transform block may be quantized through the DQ quantization mode by implementing condition 2 according to Q and/or P acquired through decoding.

In some embodiments, decoding of the significant flag is skipped if the target quantizer is the non-zero quantizer.

In some embodiments, when it is determined according to the DQ enabled flag that the current sequence enables the DQ quantization mode, it may be determined whether the transform block meets the preset condition according to the identifier of the transform tool used by the transform block, and/or SRx or SRy of the scan region of the transform block in the luma component and SRx or SRy of the scan region of the transform block in the chroma component. If the preset condition is met, decoding may be performed by implementing the operations at S903 to S905.

A decoding process according to another embodiment of the disclosure is as follows.

A decoding side may acquire bitstream information, and parse flag information of a decoding block (i.e., an encoding block that is to be decoded).

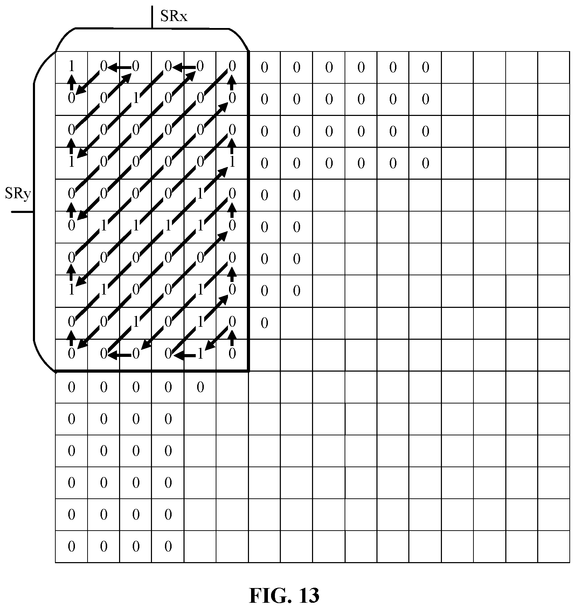

Information on a coefficient scan range in a transform block of the decoding block, including an abscissa SRx of the right end of the scan region and an ordinate SRy of the bottom end of the scan region, may be acquired. The coefficient scan region may be determined, which is a rectangular region with a top-left corner at (0, 0) and a bottom-right corner at (SRx, SRy). A diagram of coefficient coding based on the scan region may be as shown in FIG. 13, where 0 denotes a zero coefficient, and 1 denotes a non-zero (significant) coefficient. Coefficients may be decoded in an order of reverse zigzag scan from the bottom-right corner to the top-left corner, or in a mode of scan in any other form, such as horizontal scan, vertical scan, diagonal scan, etc.

A state of a state machine may be initialized to 0.

After location of a coefficient to be decoded is determined, the decoding device first may determine whether the coefficient to be decoded meets any one of: whether the coefficient to be decoded is located at a bottom-left corner of the coefficient scan region and is the only non-zero coefficient in a row the coefficient to be decoded is in, or whether the currently coded coefficient is located at a top-right corner of the coefficient scan region and is the only non-zero coefficient in a column the currently coded coefficient is in, or whether a non-zero quantizer is used as determined according to the state of the state machine the currently coded coefficient is in.

If any one of the conditions is met, sig_flag of the coefficient to be decoded may be set directly to 1. Next, a next bin acquired by parsing the bitstream may be coeff_abs_level_greater1_flag (gt1 flag) of the coefficient to be decoded. An absolute value of the coefficient to be decoded may be determined by parsing, according to a default solution for coefficient coding, the related flags including coeff_abs_level_greater2_flag, coeff_abs_level_remaining, etc. It is to be noted that a coefficient decoded in this way will not be zero.

If the conditions are not met, the next bin acquired by parsing the bitstream may be sig_flag of the coefficient to be decoded. It may be determined, according to the value of sig_flag, whether the coefficient to be decoded is non-zero. If the coefficient to be decoded is non-zero, the absolute value of the coefficient to be decoded may be determined by parsing, according to the default solution, the related flags including coeff_abs_level_greater1_flag, coeff_abs_level_greater2_flag, coeff_abs_level_remaining, etc. If the coefficient to be decoded is not a non-zero coefficient, the value of the coefficient to be decoded is 0. If the coefficient to be decoded is non-zero, the absolute value of a transform coefficient level (i.e., the absolute value of the coefficient to be decoded) may be sig_flag+coeff_abs_level_greater1_flag+coeff_abs_level_greater2_flag+coeff_abs_level_rem aining.

Finally, a sign flag may be acquired through parsing to determine positivity/negativity of the coefficient to be decoded.

The state of the next coefficient may be updated according to the absolute value and the state of the coefficient to be decoded. The next coefficient may be parsed according to a scan order.

In some embodiments of the disclosure, the coefficient to be decoded is decoded by 3 steps as follows.

At S1, a significant flag (Sig flag), a greater_than_1 flag (gt1 flag), and a greater_than_2 flag (gt2 flag) of the coefficient to be decoded are decoded based on a context model. A state of a state machine is updated according to the state of the coefficient to be decoded.

At S2, a (remaining) part of the coefficient to be decoded that has an absolute value greater than 2 (i.e., a coefficient absolute value remaining value of the coefficient to be decoded) is decoded.

At S3, sign data, (i.e., the sign flag) of the coefficient to be decoded is decoded.

Thus, in decoding a coefficient, the decoding side first may decode sig flag, gt1 flag, and gt2 flag; rapidly determine the state of the coefficient to be decoded based on sig flag, gt1 flag, and gt2 flag; and determine a target quantizer used in performing the current quantization according to the state of the coefficient to be decoded.

After the target quantizer corresponding to the coefficient to be decoded is determined according to the above steps, a reconstructed transform coefficient t' may be acquired through formula (1) or (2) according to the target quantizer and the transform coefficient level corresponding to the coefficient to be decoded.

In some embodiments, a process of inverse quantization according to the disclosure is as follows.

When dependent inverse quantization is applied to a current transform block, the disclosure defines a process of converting an M1×M2 2D quantization coefficient matrix QuantCoeffMatrix into an M1×M2 2D transform coefficient matrix CoeffMatrix. The elements of the QuantCoeffMatrix acquired by decoding a bitstream matching the disclosure have values ranging from -215 to 215-1, as shown in Table 3, for example.

Table 3

```
m=Log (M₁*M₂) / 2
shift1=m+BitDepth – 14
shift2=1 << 7
initScanOrder (ScanOrder, scan_region_x+1, scan_region_y+1, blockWidth)
numCoef=(scan_region_x+1)*(scan_region_y+1)-1
state=0
for (i=numCoef; i>=0; i--) {
    blkpos=ScanOrder (i)
    if (QuantCoeffMatrix[blkpos] != 0) {
        qIdx=QuantCoeffMatrix[blkpos]*2+(QuantCoeffMatrix[blkpos]  >  0  ?  –
(state>>1):(state>>1))
CoeffMatrix[blkpos]=Clip3(-32768,                                    32767,
(((((qIdx*WeightQuantMatrix_{M1xM2}[blkpos])>>WqmShift)*
(DequantTable(QP_X))>>4)+2^{((ShiftTable(QP_X) +shift1)-1))}>>(ShiftTable (QP_X)+shift1)))
    }
    state=update(state, QuantCoeffMatrix[blkpos]==1)
}
if (((M₁==2*M₂)||(M₂==2*M₁))||((M₁==8*M₂)||(M₂==8*M₁))){
```

```
for (i=0; i<M₁; i++) {
for (j=0; j<M₂; j++) {
        CoeffMatrix[i][j]=(CoeffMatrix[i][j]*181+shift2)>>8
}
}
}
```

In some embodiments of the disclosure, a jump condition of a quantizer may also be determined based on values of both sig flag and gtx flag. The jump condition may be worked out through any combination of the values of sig flag and gtx flag.

In some embodiments, a quantizer containing zero for DQ may be completely consistent with that for RDOQ, and a quantizer containing no zero may serve as an auxiliary quantizer.

In some embodiments, a condition of applying DQ is changed by adjusting a condition of applying IST and SBT. In an embodiment, DQ is not used when using IST, SBT, or implicit selection of transform skip (ISTS).

In some embodiments, value setting of M and N for SRx and SRy in the condition of applying DQ is changed.

It is to be noted that FIG. 8 to FIG. 13 are just examples according to the disclosure, and shall not be taken as limiting the disclosure.

Implementation according to the disclosure is elaborated with reference to the drawings. However, the disclosure is not limited to specific details in the implementation. Multiple straightforward variations may be made to technical solutions of the disclosure within the scope of the technical concept of the disclosure. All of these straightforward variations fall within the scope of the disclosure. For example, specific technical features described in implementation may be combined in any suitable mode without conflicts. Various possible combinations are not described separately in the disclosure to avoid unnecessary repetition. As another example, various different implementations according to the disclosure may be combined as desired as long as the combination does not go against the concept of the disclosure, and the combination should also be deemed falling in the scope of the disclosure.

It is to be understood that a magnitude of a sequence number of each process does not mean an execution sequence and the execution sequence of each process should be determined by its function and an internal logic and should not form any limit to an implementation process of the embodiments of the disclosure. In addition, in embodiments of the disclosure, term "and/or" is only an association relationship describing associated objects and represents that three relationships may exist. For example, A and/or B may represent three conditions: i.e., independent existence of A, existence of both A and B and independent existence of B. In addition, character "/" in the disclosure usually represents that previous and next associated objects form an "or" relationship.

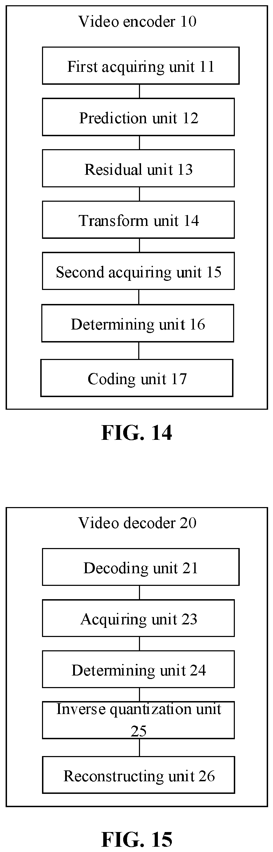

Method embodiments of the disclosure are elaborated with reference to FIG. 8 to FIG. 13. Apparatus embodiments of the disclosure are elaborated below with reference to FIG. 14 to FIG. 16.

FIG. 14 is a schematic block diagram of a video encoder according to an embodiment of the disclosure.

As shown in FIG. 14, the video encoder 10 may include a first acquiring unit 11, a prediction unit 12, a residual unit 13, a transform unit 14, a second acquiring unit 15, a determining unit 16, and a coding unit 17.

The first acquiring unit 11 is configured to acquire an encoding block.

The prediction unit 12 is configured to acquire a prediction block of the encoding block by performing prediction on the encoding block.

The residual unit 13 is configured to acquire a residual block of the encoding block according to the encoding block and the prediction block.

The transform unit 14 is configured to acquire a transform block by transforming the residual block.

The second acquiring unit 15 is configured to acquire flag information of a previous quantization coefficient quantized before a coefficient to be coded in the encoding block.

The determining unit 16 is configured to determine a target quantizer from N quantizers according to the flag information of the previous quantization coefficient, and quantize the coefficient to be coded using the target quantizer to acquire a current quantization coefficient. The N quantizers are quantizers corresponding to the DQ quantization mode. N is a positive integer greater than or equal to 2.

The coding unit 17 is configured to encode the current quantization coefficient to obtain a bitstream.

In some embodiments, at least one quantizer of the N quantizers may be a non-zero quantizer configured to quantize each transform coefficient into a non-zero quantization coefficient.

In some embodiments, at least one quantizer of the N quantizers may be a zero-point quantizer configured to non-zero a transform coefficient into zero.

In some embodiments, the N quantizers may include one zero-point quantizer and one non-zero quantizer.

In some embodiments, the determining unit 16 is specifically configured to acquire a state of the previous quantization coefficient, determine a state of the current quantization coefficient according to the flag information of the previous quantization coefficient and the state of the previous quantization coefficient, determine the target quantizer from the N quantizers according to the state of the current quantization coefficient, and quantize the coefficient to be coded using the target quantizer.

In some embodiments, the determining unit 16 is specifically configured to determine a state jump value according to the flag information of the previous quantization coefficient, and determine the state of the current quantization coefficient according to the state of the previous quantization coefficient and the state jump value.

In some embodiments, the flag information may include at least one of: a significant flag, or at least one greater_than_i flag. i=1, 2, ..., M. M may be a positive integer.

The significant flag indicates whether the quantization coefficient is zero. An i-th greater_than_i flag in the at least one greater_than_i flag indicates whether the absolute value of the quantization coefficient is greater than the positive integer i.

In some embodiments, if the flag information of the previous quantization coefficient includes the significant flag, the determining unit 16 is specifically configured to determine the state jump to be 0 if a value of the significant flag is 0.

In some embodiments, if the flag information of the previous quantization coefficient includes the significant flag and a greater_than_1 flag, the determining unit 16 is specifically configured to determine the state jump value to be 1 if values of the significant flag and the greater_than_1 flag meet a formula as follows, and determine the state jump value to be 0 if values of the significant flag and the greater_than_1 flag do not meet the formula.

The formula is

$$t = sigflag == 1 \&\& gt1 == 0$$

where t is the state jump value, sigflag is a value of the significant flag, and gt1 is a value of the greater_than_1 flag.

In some embodiments, if the flag information of the previous quantization coefficient includes the significant flag and the first M coefficient absolute value greater than i flags, the determining unit 16 is specifically configured to determine the state jump value to be 1 if a value of the significant flag is 1, values of first M-1 greater_than_i flags are 1, and a value of an M-th greater_than_i flag is 0. M may be a positive integer greater than or equal to 2.

In some embodiments, the coding unit 17 is further configured to update a state of a state machine according to a state of the current quantization coefficient.

In some embodiments, the coding unit 17 is further configured to encode the significant flag and the at least one greater_than_i flag as one coding part.

In some embodiments, the coding unit 17 is further configured to encode the significant flag using a first context model, and encode the at least one greater_than_i flag using a second context model.

In some embodiments, the first context model is identical to a context model used in encoding the significant flag through rate-distortion optimized quantization (RDOQ). Alternatively, the first context model differs from the context model used in encoding the significant flag through RDOQ.

In some embodiments, the second context model is identical to a context model used in encoding a greater_than_i flag through RDOQ.

Alternatively, the second context model differs from the context model used in encoding the greater_than_i flag through RDOQ.

Alternatively, the second context model includes a context model corresponding to the non-zero quantizer and a context model corresponding to a zero-point quantizer. The context model corresponding to the non-zero quantizer differs from the context model used in encoding the greater_than_i flag through RDOQ, and the context model corresponding to the zero-point quantizer is identical to the context model used in encoding the greater_than i flag through RDOQ. Alternatively, the context model corresponding to the non-zero quantizer, the context model corresponding to the zero-point quantizer, and the context model used in encoding the greater_than_i flag through RDOQ differ from each other.

In some embodiments, the determining unit 16 is further configured to acquire an identifier of a transform tool used by the transform block, and/or SRx or SRy of a scan region of the transform block in a luma component and SRx or SRy of a scan region of the transform block in a chroma component; determine whether the transform block meets a preset condition according to the identifier of the transform tool used by the transform block, and/or SRx or SRy of the scan region of the transform block in the luma component and SRx or SRy of the scan region of the transform block in the chroma component; determine to quantize the transform block through DQ if the transform block meets the preset condition; when it is determined that the transform block is quantized through DQ, determine the target quantizer from the N quantizers according to the flag information of the previous quantization coefficient; and quantize the coefficient to be coded using the target quantizer.

In some embodiments, the preset condition may include any one condition as follows.

In condition 1, the chroma component of the transform block is considered; or the transform block is a non-transform skip block, and the transform tool used by the transform block is not an implicit selection of transform (IST) tool and/or a sub-block transform (SBT) tool.

In condition 2, SRx or SRy of the scan region of the transform block in the luma component is greater than Q and SRx or SRy of the scan region of the transform block in the chroma component is greater than P, and the transform block is a non-transform skip block. Both Q and P are integers.

In an example, Q may be 6, and P may be 0.

In an example, at least one of Q, P, or a DQ enabled flag may be stored in a sequence header or a picture header. The DQ enabled flag indicates whether a current sequence enables the DQ quantization mode.

In some embodiments, the determining unit 16 is specifically configured to, in response to determining, according to the DQ enabled flag, that the current sequence enables the DQ quantization mode, determine whether the transform block meets the preset condition according to the identifier of the transform tool used by the transform block, and/or SRx or SRy of the scan region of the transform block in the luma component and SRx or SRy of the scan region of the transform block in the chroma component.

In some embodiments, the coding unit 17 is further configured to skip coding the significant flag in response to the target quantizer being the non-zero quantizer.

In some embodiments, the value of the significant flag is 1 in response to the target quantizer being the non-zero quantizer.

In some embodiments, the coding unit 17 is specifically configured to encode the current quantization coefficient by performing the following three operations: at S1, encoding a significant flag, a greater_than_1 flag, and a greater_than_2 flag of the current quantization coefficient based on a context model, and updating a state of a state machine according to the state of the current quantization coefficient; at S2, encoding a coefficient absolute value remaining value of the current quantization coefficient; at S3, encoding a sign flag of the current quantization coefficient.

It is to be noted that apparatus embodiments may correspond to method embodiments. Refer to the method embodiments for similar description in the apparatus embodiments, which is not repeated here to avoid repetition. Specifically, the video encoder 10 shown in FIG. 14 may perform the method according to embodiments of the disclosure, and the above-mentioned operation and/or function and another operation and/or function of each unit in the video encoder 10 is configured to implement a corresponding flow in the method, which is not repeated here for brevity.

FIG. 15 is a schematic block diagram of a video decoder according to an embodiment of the disclosure.

As shown in FIG. 15, the video decoder 20 may include a decoding unit 21, an acquiring unit 23, a determining unit 24, an inverse quantization unit 25, and a reconstructing unit 26.

The decoding unit 21 is configured to acquire flag information of a decoding block by decoding a bitstream.

The acquiring unit 23 is configured to acquire, from the flag information of the decoding block, flag information of a previous quantization coefficient subjected to inverse quantization before a coefficient to be decoded in the decoding block. The coefficient to be decoded is acquired by performing quantization using a quantizer of N quantizers. The N quantizers are quantizers corresponding to the DQ quantization mode. N is a positive integer greater than or equal to 2.

The determining unit 24 is configured to determine, according to the flag information of the previous quantization coefficient, a target quantizer in the N quantizers used to quantize the coefficient to be decoded.

The inverse quantization unit 25 is configured to perform inverse quantization on the coefficient to be decoded according to the target quantizer to obtain a coefficient to be coded.

The reconstructing unit 26 is configured to acquire a reconstructed block according to the coefficient to be coded.

In some embodiments, at least one quantizer of the N quantizers is a non-zero quantizer configured to quantize each transform coefficient into a non-zero quantization coefficient.

In some embodiments, at least one quantizer of the N quantizers is a zero-point quantizer configured to quantize a transform coefficient into zero.

In some embodiments, the N quantizers include one zero-point quantizer and one non-zero quantizer.

In some embodiments, the determining unit 24 is specifically configured to acquire a state of the previous quantization coefficient; determine a state of the coefficient to be decoded according to the flag information of the previous quantization coefficient and the state of the previous quantization coefficient; and determine the target quantizer in the N quantizers according to the state of the coefficient to be decoded.

In some embodiments, the determining unit 24 is specifically configured to determine a state jump value according to the flag information of the previous quantization coefficient; and determine the state of the coefficient to be decoded according to the state of the previous quantization coefficient and the state jump value.

In some embodiments, the flag information includes at least one of: a significant flag, or at least one greater_than_i flag. i=1, 2,..., M. M may be a positive integer.

The significant flag indicates whether the quantization coefficient is zero. An i-th greater_than_i flag in the at least one greater_than_i flag indicates whether the absolute value of the quantization coefficient is greater than the positive integer i.

In some embodiments, if the flag information of the previous quantization coefficient includes the significant flag, the determining unit 24 is specifically configured to determine the state jump value to be 0 if the value of the significant flag is 0.

In some embodiments, if the flag information of the previous quantization coefficient includes the significant flag and a greater_than_1 flag, the determining unit 24 is specifically configured to determine the state jump value to be 1 if values of the significant flag and the greater_than_1 flag meet a formula as follows; and determine the state jump value to be 0 if values of the significant flag and the greater_than_1 flag do not meet the formula.

The formula is

$$t = sigflag == 1 \&\& gt1 == 0$$

where t is the state jump value, sigflag is a value of the significant flag, and gt1 is a value of the greater_than_1 flag.

In some embodiments, if the flag information of the previous quantization coefficient includes the significant flag and the first M coefficient absolute value greater than i flags, the determining unit 24 is specifically configured to determine the state jump value to be 1 if a value of the significant flag is 1, values of first M-1 greater_than_i flags are 1, and a value of an M-th greater_than_i flag is 0. M may be a positive integer greater than or equal to 2.

In some embodiments, the determining unit 24 is further configured to update a state of a state machine according to a state of the coefficient to be decoded.

In some embodiments, the determining unit 24 is specifically configured to decode the bitstream to acquire an identifier of a transform tool used by a transform block, and/or SRx or SRy of a scan region of the transform block in a luma component and SRx or SRy of a scan region of the transform block in a chroma component; determine whether the transform block meets a preset condition according to the identifier of the transform tool used by the transform block, and/or SRx or SRy of the scan region of the transform block in the luma component and SRx or SRy of the scan region of the transform block in the chroma component; and if the transform block meets the preset condition, determine, according to the flag information of the previous quantization coefficient, the target quantizer in the N quantizers used to quantize the coefficient to be decoded.

In some embodiments, the preset condition may include any one condition as follows.

In condition 1, the chroma component of the transform block is considered; or the transform block is a non-transform skip block, and the transform tool used by the transform block is not an implicit selection of transform (IST) tool and/or a sub-block transform (SBT) tool.

In condition 2, SRx or SRy of the scan region of the transform block in the luma component is greater than Q and SRx or SRy of the scan region of the transform block in the chroma component is greater than P, and the transform block is a non-transform skip block. Both Q and P are integers.

In an example, Q may be 6, and P may be 0.

In an example, at least one of Q, P, or a DQ enabled flag may be stored in a sequence header or a picture header. The DQ enabled flag indicates whether a current sequence enables the DQ quantization mode.

In some embodiments, the determining unit 24 is specifically configured to, in response to determining according to the DQ enabled flag that the current sequence enables the DQ quantization mode, determine whether the transform block meets the preset condition according to the identifier of the transform tool used by the transform block, and/or SRx or SRy of the scan region of the transform block in the luma component and SRx or SRy of the scan region of the transform block in the chroma component.

In some embodiments, the decoding unit 21 is further configured to skip decoding the significant flag if the target quantizer is the non-zero quantizer.

In some embodiments, the value of the significant flag is 1 if the target quantizer is a non-zero quantizer.

In some embodiments, the determining unit 24 is specifically configured to determine that a significant flag of the coefficient to be decoded equals a second value if it is determined, according to a current state of a state machine, that the coefficient to be decoded is acquired by performing quantization using the non-zero quantizer. The second value indicates that the coefficient to be decoded is non-zero.

In an example, the second value is 1.

In some embodiments, the decoding unit 21 is specifically configured to decode the coefficient to be decoded by performing the following operations: at S 1, decoding a significant flag, a greater_than_1 flag, and a greater_than_2 flag of the coefficient to be decoded based on a context model, and updating a state of a state machine according to the state of the coefficient to be decoded; at S2, decoding a coefficient absolute value remaining value flag of the coefficient to be decoded; at S3, decoding a sign flag of the coefficient to be decoded.

It is to be noted that an apparatus embodiment may correspond to a method embodiment. Refer to the method embodiment for similar description in the apparatus embodiment, which is not repeated here to avoid repetition. Specifically, the video decoder 20 shown in FIG. 15 may correspond to a body that performs a method according to embodiments of the disclosure. The above-mentioned operation and/or function and another operation and/or function of each unit in the video decoder 20 is configured to implement a corresponding flow in the method, which is not repeated here for brevity.

The apparatus and system according to embodiments of the disclosure are described in terms of functional units with reference to the drawings. It is to be noted that the functional units may be implemented by hardware, software instructions, or a combination of hardware and software units. Specifically, each operation in the above method embodiments of the disclosure may be completed via an integrated logic circuit of hardware in the processor or an instruction in a software form. The operation of the method disclosed in embodiments of the disclosure may be directly embodied to be executed and completed by a hardware decoding processor or executed and completed by a combination of hardware and software modules in the decoding processor. In an example, a software unit may be located in a mature storage medium in the art, such as a random access memory (RAM), a flash memory, a read only memory (ROM), a programmable read-only memory (PROM), an electrically EPROM (EEPROM) or a register. The storage medium is located in the memory. The processor reads information from the memory and completes the operations of the foregoing methods in combination with the hardware of the processor.

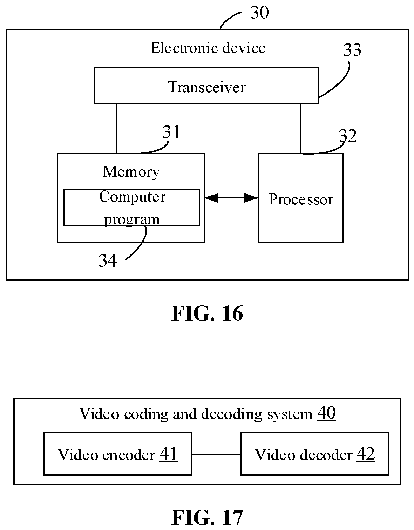

FIG. 16 is a schematic block diagram of an electronic device 30 according to an embodiment of the disclosure.

As shown in FIG. 16, the electronic device 30 may be a video encoder or a video decoder according to embodiments of the disclosure. The electronic device 30 may include a memory 33 and a processor 32.

The memory 33 is configured to store a computer program 34, and transmit the computer program 34 to the processor 32. In other words, the processor 32 is configured to call and run the computer program 34 in the memory 33 to implement the method according to the embodiments of the disclosure.

For example, the processor 32 may be configured to implement the operations in the foregoing method according to instructions in the computer program 34.

In some embodiments of the disclosure, the processor 32 may include, but is not limited to, a general-purpose processor, a digital signal processor (DSP), an application specific integrated circuit (ASIC), a field programmable gate array (FPGA), or another programmable logic device, a discrete gate, or a transistor logic device, a discrete hardware component, etc.

In some embodiments of the disclosure, the memory 33 may include, but is not limited to, a volatile memory and/or a non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM) serving as an external cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch link DRAM (SLDRAM) and a Direct Rambus RAM (DR RAM).

In some embodiments of the disclosure, the computer program 34 may be partitioned into one or more units. The one or more units may be stored in the memory 33, and executed by the processor 32 to perform the method according to the disclosure. The one or more units may be a series of computer program instruction segments capable of performing specific functions. The instruction segments may be configured to describe the process of executing the computer program 34 in the electronic device 30.

As shown in FIG. 16, the electronic device 30 may further include a transceiver 33.

The transceiver 33 may be connected to the processor 32 or the memory 33.

The processor 32 may control the transceiver 33 to communication with another device, specifically, to transmit information or data to another device, or receive information or data from another device. The transceiver 33 may include a transmitter and a receiver. The transceiver 33 may further include one or more antennas.

It is to be understood that various components in the electronic device 30 may be connected through a bus system. In addition to a data bus, the bus system may further include a power bus, a control bus, and a status signal bus.

FIG. 17 is a schematic block diagram of a video coding and decoding system 40 according to an embodiment of the disclosure.

As shown in FIG. 17, the video coding and decoding system 40 may include a video encoder 41 and a video decoder 42. The video encoder 41 may be configured to implement the method for encoding a video according to the embodiments of the disclosure. The video decoder 42 may be configured to implement the method for decoding a video according to the embodiments of the disclosure.

The disclosure further provides a computer storage medium having stored thereon a computer program. The computer program, when executed by a computer, causes the computer to implement the method of the above method embodiments. Alternatively, the embodiments of the disclosure further provide a computer program product including instructions. When executed by a computer, the instructions cause the computer to implement the method of the above method embodiments.

The disclosure further provides a bitstream generated according to the method for encoding a video according to the above embodiments.

During implementation with the software, the embodiments may be implemented completely or partially in form of a computer program product. The computer program product includes one or more computer instructions. When the computer program instruction is loaded and executed on a computer, the flows or functions according to the embodiments of the present disclosure are completely or partially generated. The computer may be a universal computer, a dedicated computer, a computer network, or another programmable device. The computer instruction may be stored in a computer-readable storage medium or transmitted from a computer-readable storage medium to another computer-readable storage medium. For example, the computer instruction may be transmitted from a website, computer, server, or data center to another website, computer, server, or data center in a wired (such as coaxial cable, optical fiber, and Digital Subscriber Line (DSL)) or wireless (such as infrared, radio, and microwave) manner. The computer-readable storage medium may be any available medium accessible for the computer or a data storage device integrated with one or more available media, such as a server and a data center. The available medium may be a magnetic medium (for example, a floppy disk, a hard disk and a magnetic tape), an optical medium (for example, a Digital Video Disk (DVD)), a semiconductor medium (for example, a Solid State Disk (SSD)), or the like.

Those of ordinary skill in the art may realize that the units and algorithm operations of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the disclosure.

In some embodiments provided by the disclosure, it is to be understood that the disclosed system, device and method may be implemented in another manner. For example, the device embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between each displayed or discussed component may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement. For example, each functional unit in each embodiment of the disclosure may be integrated into a processing unit, each unit may also physically exist independently, and two or more than two units may also be integrated into a unit.

The above is only the specific implementation mode of the disclosure and not intended to limit the scope of protection of the disclosure. Any variations or replacements apparent to those skilled in the art within the technical scope disclosed by the disclosure shall fall within the scope of protection of the disclosure. Therefore, the scope of protection of the disclosure shall be subject to the scope of protection of the claims.

## Claims

1. A method for encoding a video, comprising:

   acquiring an encoding block;
   acquiring a transform block of the encoding block by processing the encoding block;
   acquiring flag information of a previous quantization coefficient quantized before a coefficient to be coded in the transform block;
   determining a target quantizer from N quantizers according to the flag information of the previous quantization coefficient and quantizing the coefficient to be coded using the target quantizer to acquire a current quantization coefficient, the N quantizers being quantizers corresponding to dependent quantization, DQ, N being a positive integer greater than or equal to 2.

2. The method of claim 1, wherein at least one quantizer of the N quantizers is a non-zero quantizer configured to quantize each transform coefficient into a non-zero quantization coefficient.

3. The method of claim 2, wherein at least one quantizer of the N quantizers is a zero-point quantizer configured to quantize a transform coefficient into zero.

4. The method of claim 3, wherein the N quantizers comprise one zero-point quantizer and one non-zero quantizer.

5. The method of claim 2, wherein determining the target quantizer from the N quantizers according to the flag information of the previous quantization coefficient and quantizing the coefficient to be coded using the target quantizer comprises:

   acquiring a state of the previous quantization coefficient;
   determining a state of the current quantization coefficient according to the flag information of the previous quantization coefficient and the state of the previous quantization coefficient;
   determining the target quantizer from the N quantizers according to the state of the current quantization coefficient; and
   quantizing the coefficient to be coded using the target quantizer.

6. The method of claim 5, wherein determining the state of the current quantization coefficient according to the flag information of the previous quantization coefficient and the state of the previous quantization coefficient comprises:

   determining a state jump value according to the flag information of the previous quantization coefficient; and
   determining the state of the current quantization coefficient according to the state of the previous quantization coefficient and the state jump value.

7. The method of claim 6, wherein the flag information comprises at least one of a non-zero coefficient, significant, flag or at least one coefficient absolute value greater than i, greater_than_i, flag, i=1, 2,..., M, M being a positive integer.

8. The method of claim 7, wherein if the flag information of the previous quantization coefficient comprises the significant flag, determining the state jump value according to the flag information of the previous quantization coefficient comprises:
   determining the state jump value to be 0 in response to a value of the significance flag being 0.

9. The method of claim 7, wherein if the flag information of the previous quantization coefficient comprises the significant flag and a coefficient absolute value greater than 1, greater_than_1, flag, determining the state jump value according to the flag information of the previous quantization coefficient comprises:

   determining the state jump value to be 1 in response to values of the significant flag and the greater_than_1 flag meeting a formula; and
determining the state jump value to be 0 in response to the values of the significant flag and the greater_than_1 flag not meeting the formula,
the formula being

$$t = sigflag == 1\&\&gt1 == 0$$

where t is the state jump value, sigflag is a value of the significant flag, and gt1 is a value of the greater_than_1 flag.

10. The method of claim 7, wherein if the flag information of the previous quantization coefficient comprises the significant flag and M greater_than_i flags, determining the state jump value according to the flag information of the previous quantization coefficient comprises:
determining the state jump value to be 1 in response to a value of the significant flag being 1, values of first M-1 greater_than_i flags being 1, and a value of an M-th greater_than_i flag being 0, wherein M is the positive integer greater than or equal to 2.

11. The method of any one of claims 1 to 10, further comprising:
updating a state of a state machine according to a state of the current quantization coefficient.

12. The method of claim 7, further comprising:
encoding the significant flag and the at least one greater_than_i flag as one coding part.

13. The method of claim 12, wherein encoding the significant flag and the at least one greater_than_i flag as the one coding part comprises:

encoding the significant flag using a first context model; and
encoding the at least one greater_than_i flag using a second context model.

14. The method of claim 13, wherein the first context model is identical to a context model used in encoding the significant flag through rate-distortion optimized quantization, RDOQ, or
the first context model is different from the context model used in encoding the significant flag through the RDOQ.

15. The method of claim 13, wherein the second context model is identical to a context model used in encoding the at least one greater_than_i flag through rate-distortion optimized quantization, RDOQ, or

the second context model is different from the context model used in encoding the at least one greater_than_i flag through the RDOQ, or
the second context model comprises a context model corresponding to the non-zero quantizer and a context model corresponding to a zero-point quantizer, the context model corresponding to the non-zero quantizer differs from the context model used in encoding the at least one greater_than_i flag through the RDOQ, and the context model corresponding to the zero-point quantizer is identical to the context model used in encoding the at least one greater_than_i flag through the RDOQ, or the context model corresponding to the non-zero quantizer, the context model corresponding to the zero-point quantizer, and the context model used in encoding the at least one greater_than_i flag through the RDOQ differ from each other.

16. The method of claim 1, further comprising: before determining the target quantizer from the N quantizers according to the flag information of the previous quantization coefficient and quantizing the coefficient to be coded using the target quantizer,

acquiring at least one of an identifier of a transform tool used by the transform block, or SRx or SRy of a scan region of the transform block in a luma component and SRx or SRy of a scan region of the transform block in a chroma component;
determining whether the transform block meets a preset condition according to at least one of the identifier of the transform tool used by the transform block, or SRx or SRy of the scan region of the transform block in the luma component and SRx or SRy of the scan region of the transform block in the chroma component; and
determining to quantize the transform block through the DQ in response to the transform block meeting the preset condition;

wherein determining the target quantizer from the N quantizers according to the flag information of the previous quantization coefficient and quantizing the coefficient to be coded using the target quantizer comprises:

determining, in response to determining to quantize the transform block through the DQ, the target quantizer from the N quantizers according to the flag information of the previous quantization coefficient and quantizing the coefficient to be coded using the target quantizer.

17. The method of claim 16, wherein the preset condition comprises one of:

condition 1, in which the chroma component of the transform block is considered, or the transform block is a non-transform skip block and the transform tool used by the transform block is not an implicit selection of transform, IST, tool and/or a sub-block transform, SBT, tool; and

condition 2, in which SRx or SRy of the scan region of the transform block in the luma component is greater than Q and SRx or SRy of the scan region of the transform block in the chroma component is greater than P, and the transform block is a non-transform skip block, both Q and P being integers.

18. The method of claim 17, wherein Q is 6 and P is 0.

19. The method of claim 17, wherein at least one of Q, P, or a DQ enabled flag is stored in a sequence header or a picture header, and wherein the DQ enabled flag indicates whether a current sequence enables the DQ.

20. The method of claim 19, wherein determining whether the transform block meets the preset condition according to at least one of the identifier of the transform tool used by the transform block, or SRx or SRy of the scan region of the transform block in the luma component and SRx or SRy of the scan region of the transform block in the chroma component comprises:

in response to determining according to the DQ enabled flag that the current sequence enables the DQ, determining whether the transform block meets the preset condition according to at least one of the identifier of the transform tool used by the transform block, or SRx or SRy of the scan region of the transform block in the luma component and SRx or SRy of the scan region of the transform block in the chroma component

21. The method of claim 7, further comprising:
skipping encoding the significant flag in response to the target quantizer being the non-zero quantizer.

22. The method of claim 21, wherein a value of the significant flag is 1 in response to the target quantizer being the non-zero quantizer.

23. The method of claim 7, wherein the current quantization coefficient is encoded by:

encoding a significant flag, a greater_than_1 flag, and a coefficient absolute value greater than 2, greater_than_2, flag of the current quantization coefficient based on a context model, and updating a state of a state machine according to the state of the current quantization coefficient;

encoding a coefficient absolute value remaining value of the current quantization coefficient; and

encoding a sign flag of the current quantization coefficient.

24. A method for decoding a video, comprising:

acquiring flag information of a decoding block by decoding a bitstream;

acquiring, from the flag information of the decoding block, flag information of a previous quantization coefficient subjected to inverse quantization before a coefficient to be decoded in the decoding block, the coefficient to be decoded being acquired by performing quantization using a quantizer of N quantizers, the N quantizers being quantizers corresponding to dependent quantization, DQ, N being a positive integer greater than or equal to 2;

determining, according to the flag information of the previous quantization coefficient, a target quantizer in the N quantizers used to quantize the coefficient to be decoded; and

performing inverse quantization on the coefficient to be decoded according to the target quantizer.

25. The method of claim 24, wherein at least one quantizer of the N quantizers is a non-zero quantizer configured to quantize each transform coefficient into a non-zero quantization coefficient.

26. The method of claim 25, wherein at least one quantizer of the N quantizers is a zero-point quantizer configured to quantize a transform coefficient into zero.

**27.** The method of claim 26, wherein the N quantizers comprise one zero-point quantizer and one non-zero quantizer.

**28.** The method of claim 25, wherein determining, according to the flag information of the previous quantization coefficient, the target quantizer in the N quantizers used to quantize the coefficient to be decoded comprises:

acquiring a state of the previous quantization coefficient;
determining a state of the coefficient to be decoded according to the flag information of the previous quantization coefficient and the state of the previous quantization coefficient; and
determining the target quantizer in the N quantizers according to the state of the coefficient to be decoded.

**29.** The method of claim 28, wherein determining the state of the coefficient to be decoded according to the flag information of the previous quantization coefficient and the state of the previous quantization coefficient comprises:

determining a state jump value according to the flag information of the previous quantization coefficient; and
determining the state of the coefficient to be decoded according to the state of the previous quantization coefficient and the state jump value.

**30.** The method of claim 28, wherein the flag information comprises at least one of a non-zero coefficient, significant, flag or at least one coefficient absolute value greater than i, greater_than_i, flag, $i=1, 2,..., M$, M being a positive integer.

**31.** The method of claim 30, wherein if the flag information of the previous quantization coefficient comprises the significant flag, determining the state jump value according to the flag information of the previous quantization coefficient comprises:
determining the state jump value to be 0 in response to a value of the significant flag being 0.

**32.** The method of claim 30, wherein if the flag information of the previous quantization coefficient comprises the significant flag and a coefficient absolute value greater than 1, greater_than_1, flag, determining the state jump value according to the flag information of the previous quantization coefficient comprises:

determining the state jump value to be 1 in response to values of the significant flag and the greater_than_1 flag meeting a formula; and
determining the state jump value to be 0 in response to the values of the significant flag and the greater_than_1 flag not meeting the formula,
the formula being

$$t = sigflag == 1 \&\& gt1 == 0$$

where t is the state jump value, sigflag is a value of the significant flag, and gt1 is a value of the greater_than_1 flag.

**33.** The method of claim 30, wherein if the flag information of the previous quantization coefficient comprises the significant flag and M greater_than_i flags, determining the state jump value according to the flag information of the previous quantization coefficient comprises:
determining the state jump value to be 1 in response to a value of the significant flag being 1, values of first M-1 greater_than_i flags being 1, and a value of an M-th greater_than_i flag being 0, wherein M is the positive integer greater than or equal to 2.

**34.** The method of any one of claims 24 to 33, further comprising:
updating a state of a state machine according to a state of the coefficient to be decoded.

**35.** The method of claim 24, further comprising: before determining, according to the flag information of the previous quantization coefficient, the target quantizer in the N quantizers used to quantize the coefficient to be decoded,

decoding the bitstream to acquire at least one of an identifier of a transform tool used by a transform block, or SRx or SRy of a scan region of the transform block in a luma component and SRx or SRy of a scan region of the transform block in a chroma component; and

determining whether the transform block meets a preset condition according to at least one of the identifier of the transform tool used by the transform block, or SRx or SRy of the scan region of the transform block in the luma component and SRx or SRy of the scan region of the transform block in the chroma component;

wherein determining, according to the flag information of the previous quantization coefficient, the target quantizer in the N quantizers used to quantize the coefficient to be decoded comprises:

determining, according to the flag information of the previous quantization coefficient, the target quantizer in the N quantizers used to quantize the coefficient to be decoded in response to the transform block meeting the preset condition.

36. The method of claim 35, wherein the preset condition comprises one of:

condition 1, in which the chroma component of the transform block is considered, or the transform block is a non-transform skip block and the transform tool used by the transform block is not an implicit selection of transform, IST, tool and/or a sub-block transform, SBT, tool; and

condition 2, in which SRx or SRy of the scan region of the transform block in the luma component is greater than Q and SRx or SRy of the scan region of the transform block in the chroma component is greater than P, and the transform block is a non-transform skip block, both Q and P being integers

37. The method of claim 36, wherein Q is 6 and P is 0.

38. The method of claim 36, wherein at least one of Q, P, or a DQ enabled flag is stored in a sequence header or a picture header, and wherein the DQ enabled flag indicates whether a current sequence enables the DQ.

39. The method of claim 35, wherein determining whether the transform block meets the preset condition according to at least one of the identifier of the transform tool used by the transform block, or SRx or SRy of the scan region of the transform block in the luma component and SRx or SRy of the scan region of the transform block in the chroma component comprises:

in response to determining according to the DQ enabled flag that the current sequence enables the DQ, determining whether the transform block meets the preset condition according to at least one of the identifier of the transform tool used by the transform block, or SRx or SRy of the scan region of the transform block in the luma component and SRx or SRy of the scan region of the transform block in the chroma component.

40. The method of claim 30, further comprising:

skipping decoding the significant flag in response to the target quantizer being the non-zero quantizer.

41. The method of claim 40, wherein a value of the significant flag is 1 in response to the target quantizer being the non-zero quantizer.

42. The method of claim 30, further comprising:

in response to determining, according to a current state of a state machine, that the coefficient to be decoded is acquired by performing quantization using the non-zero quantizer, determining a value of a significant flag of the coefficient to be decoded to be a second value, the second value indicating that the coefficient to be decoded is non-zero.

43. The method of claim 42, wherein the second value is 1.

44. The method of claim 30, wherein the coefficient to be decoded is decoded by:

decoding a significant flag, a greater_than_1 flag, and a coefficient absolute value greater than 2, greater_than_2, flag of the coefficient to be decoded based on a context model, and updating a state of a state machine according to the state of the coefficient to be decoded;

decoding a coefficient absolute value remaining value flag of the coefficient to be decoded; and

decoding a sign flag of the coefficient to be decoded.

45. A video encoder, comprising:

a first acquiring unit, configured to acquire an encoding block;

a transform unit, configured to acquire a transform block of the encoding block by processing the encoding block;

a second acquiring unit, configured to acquire flag information of a previous quantization coefficient quantized before a coefficient to be coded in the transform block; and

a determining unit, configured to determine a target quantizer from N quantizers according to the flag information of the previous quantization coefficient and quantize the coefficient to be coded using the target quantizer to acquire a current quantization coefficient, the N quantizers being quantizers corresponding to dependent quantization, DQ, N being a positive integer greater than or equal to 2.

**46.** A video decoder, comprising:

a first decoding unit, configured to acquire flag information of a decoding block by decoding a bitstream;

an acquiring unit, configured to acquire, from the flag information of the decoding block, flag information of a previous quantization coefficient subjected to inverse quantization before a coefficient to be decoded in the decoding block, the coefficient to be decoded being acquired by performing quantization using a quantizer of N quantizers, the N quantizers being quantizers corresponding to dependent quantization, DQ, N being a positive integer greater than or equal to 2;

a determining unit, configured to determine, according to the flag information of the previous quantization coefficient, the target quantizer in the N quantizers used to quantize the coefficient to be decoded; and

an inverse quantization unit, configured to perform inverse quantization on the coefficient to be decoded according to the target quantizer.

**47.** A video encoder, comprising a memory and a processor, wherein

the memory is configured to store a computer program, and

the processor is configured to execute the computer program to implement the method of any one of claims 1 to 23.

**48.** A video decoder, comprising a memory and a processor, wherein

the memory is configured to store a computer program, and

the processor is configured to execute the computer program to implement the method of any one of claims 24 to 44.

**49.** A video coding and decoding system, comprising:

the video encoder of claim 45 or 47; and

the video decoder of claim 46 or 48.

**50.** A computer readable storage medium, having stored thereon computer-executable instructions that, when executed by a processor, implement the method of any one of claims 1 to 23, or the method of any one of claims 24 to 44.

100

Coding device 110

| Video source 111 | Video encoder 112 | Output interface 113 |

~ 130

Decoding device 120

| Display apparatus 123 | Video decoder 122 | Input interface 121 |

**FIG. 1**

Video encoder 200

Input video stream

220 Residual block

Prediction block

Prediction unit 210

Inter prediction unit 211

Intra estimation unit 212

250

Reconstructed block

Quantized transform coefficient

Transform / quantization unit 230

Inverse transform / quantization unit 240

Loop filtering unit 260

Decoded picture buffer 270

Prediction block

Entropy coding unit 280

Bitstream

**FIG. 2**

EP 4 307 662 A1

FIG. 3

FIG. 4

(a)

| current | next state | |
|---|---|---|
| state | (k & 1) == 0 | (k & 1) == 1 |
| 0 | 0 | 2 |
| 1 | 2 | 0 |
| 2 | 1 | 3 |
| 3 | 3 | 1 |

(b)

FIG. 5

**FIG. 6**

**FIG. 7**

An encoding block is acquired — S801

A prediction block of the encoding block is acquired by performing prediction on the encoding block — S802

A residual block of the encoding block is acquired according to the encoding block and the prediction block — S803

A transform block is acquired by transforming the residual block — S804

Flag information of a previous quantization coefficient quantized before a coefficient to be coded in the transform block is acquired — S805

A target quantizer is determined from N quantizers according to the flag information of the previous quantization coefficient, and the coefficient to be coded is quantized using the target quantizer to acquire a current quantization coefficient, the N quantizers being quantizers corresponding to the DQ quantization mode — S806

The current quantization coefficient is encoded to obtain a bitstream — S807

**FIG. 8**

**FIG. 9**

**FIG. 10**

| current state | next state | |
|---|---|---|
| | t is false | t is true |
| 0 | 0 | 2 |
| 1 | 2 | 0 |
| 2 | 1 | 3 |
| 3 | 3 | 1 |

**FIG. 11**

Flag information of a decoding block is acquired by decoding a bitstream — S901

Flag information of a previous quantization coefficient subjected to inverse quantization before a coefficient to be decoded in the decoding block is acquired from the flag information of the decoding block, the coefficient to be decoded is acquired by performing quantization using a quantizer of N quantizers, and the N quantizers are quantizers corresponding to DQ quantization mode — S902

A target quantizer in the N quantizers used to quantize the coefficient to be decoded is determined according to the flag information of the previous quantization coefficient — S903

Inverse quantization is performed on the coefficient to be decoded according to the target quantizer to obtain a coefficient to be coded — S904

A reconstructed block is acquired according to the coefficient to be coded — S905

**FIG. 12**

**FIG. 13**

Video encoder 10

First acquiring unit 11

Prediction unit 12

Residual unit 13

Transform unit 14

Second acquiring unit 15

Determining unit 16

Coding unit 17

**FIG. 14**

Video decoder 20

Decoding unit 21

Acquiring unit 23

Determining unit 24

Inverse quantization unit 25

Reconstructing unit 26

**FIG. 15**

30

Electronic device

33

Transceiver

31

Memory

Computer
program

Processor

32

34

**FIG. 16**

Video coding and decoding system 40

Video encoder 41

Video decoder 42

**FIG. 17**

## INTERNATIONAL SEARCH REPORT

| International application No. |
| --- |
| **PCT/CN2021/087043** |

**A. CLASSIFICATION OF SUBJECT MATTER**

H04N 19/124(2014.01)i

According to International Patent Classification (IPC) or to both national classification and IPC

**B. FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNABS; CNTXT; EPTXT; USTXT; WOTXT; VEN; CNKI: OPPO, 视频, 编码, 解码, 量化, 依赖, 量化器, 状态, video, code, encode, decode, DQ, dependent quantization, state

**C. DOCUMENTS CONSIDERED TO BE RELEVANT**

| Category* | Citation of document, with indication, where appropriate, of the relevant passages | Relevant to claim No. |
| --- | --- | --- |
| X | CN 112352429 A (QUALCOMM INC.) 09 February 2021 (2021-02-09) description, paragraphs [0022]-[0183], and figures 1-7 | 1-50 |
| A | CN 112385214 A (MEDIATEK SINGAPORE PTE. LTD.) 19 February 2021 (2021-02-19) entire document | 1-50 |
| A | CN 112236999 A (FRAUNHOFER-GESELLSCHAFT ZUR FÖRDERUNG DER ANGEWANDTEN FORSCHUNG E. V.) 15 January 2021 (2021-01-15) entire document | 1-50 |

☐ Further documents are listed in the continuation of Box C.　　☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **23 November 2021** | **02 December 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2021/087043**

| Patent document cited in search report | | | Publication date (day/month/year) | Patent family member(s) | | | Publication date (day/month/year) |
|---|---|---|---|---|---|---|---|
| CN | 112352429 | A | 09 February 2021 | WO | 2020010127 | A1 | 09 January 2020 |
| | | | | US | 11019346 | B2 | 25 May 2021 |
| | | | | US | 2020007873 | A1 | 02 January 2020 |
| CN | 112385214 | A | 19 February 2021 | TW | 202021342 | A | 01 June 2020 |
| | | | | EP | 3827587 | A1 | 02 June 2021 |
| | | | | KR | 20210029276 | A | 15 March 2021 |
| | | | | US | 2020036969 | A1 | 30 January 2020 |
| | | | | WO | 2020020221 | A1 | 30 January 2020 |
| CN | 112236999 | A | 15 January 2021 | WO | 2019185769 | A1 | 03 October 2019 |
| | | | | EP | 3777153 | A1 | 17 February 2021 |
| | | | | KR | 20210003125 | A | 11 January 2021 |
| | | | | US | 2021084304 | A1 | 18 March 2021 |
| | | | | TW | 202005376 | A | 16 January 2020 |
| | | | | JP | 2021519544 | W | 10 August 2021 |
| | | | | IN | 202037041942 | A | 23 October 2020 |

Form PCT/ISA/210 (patent family annex) (January 2015)

**REFERENCES CITED IN THE DESCRIPTION**

**Patent documents cited in the description**

- CN 202110272824